# EUROPÄISCHE PATENTSCHRIFT

(11) **EP 3 911 543 B1**
(45) Veröffentlichungstag und Bekanntmachung des Hinweises auf die Patenterteilung: **31.07.2024**
(21) Anmeldenummer: 19801817.8
(22) Anmeldetag: 07.11.2019
(51) Int. Cl.: B60S 1/52, B60S 1/38, B60S 1/40

(54) **WISCHBLATTVORRICHTUNG**
WIPER BLADE DEVICE
DISPOSITIF FORMANT BALAI D'ESSUIE-GLACE

(30) Priorität: 17.01.2019 DE 102019200521
(43) Veröffentlichungstag der Anmeldung: 24.11.2021
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2019/080478
(87) Internationale Veröffentlichungsnummer: WO 2020/147994

(56) Entgegenhaltungen:
- EP-A2- 2 505 440
- WO-A1-2019/120670
- DE-A1- 102007 062 304
- DE-A1- 102010 025 687
- DE-A1- 102013 103 279
- DE-U1- 202017 006 994
- US-A1- 2011 185 531

## Beschreibung

### Stand der Technik

Es ist bereits eine Wischblattvorrichtung, insbesondere Scheibenwischer-Wischblattvorrichtung, mit zumindest einem Wischblatt, mit zumindest einer Adaptereinheit zu einer Kopplung des Wischblatts mit einem Wischarm eines Wischers, insbesondere Scheibenwischers, mit zumindest einer in dem Wischblatt integrierten Sprüheinheit und mit zumindest einer Waschwasserverteilereinheit zu einer Zuführung von Waschwasser zu der Sprüheinheit, insbesondere zu zumindest im Wesentlichen parallel zu einer Haupterstreckungsrichtung des Wischblatts entlang des Wischblatts angeordneten Düsenelementen der Sprüheinheit, wobei die Waschwasserverteilereinheit zumindest ein Kanalkupplungselement zu einer, insbesondere für eine Durchleitung eines Fluids vorgesehenen, vorzugsweise fluiddichten, Kupplung zumindest eines Teils der Waschwasserverteilereinheit mit einem Waschwasserkanal der Sprüheinheit aufweist, und wobei die Waschwasserverteilereinheit zumindest ein Adapterkupplungselement zu einer, insbesondere für eine Durchleitung eines Fluids vorgesehenen, vorzugsweise fluiddichten, Kupplung zumindest eines weiteren Teils der Waschwasserverteilereinheit mit einem weiteren Waschwasserkanal der Adaptereinheit aufweist, vorgeschlagen worden. EP-A-2505440 offenbart den Oberbegriff des Anspruchs 1. Die WO 2019/120670 A1 wird als Stand der Technik nach Art. 54(3) EPÜ genannt.

### Offenbarung der Erfindung

Die Erfindung geht aus von einer Wischblattvorrichtung, insbesondere Scheibenwischer-Wischblattvorrichtung, mit zumindest einem Wischblatt, mit zumindest einer Adaptereinheit zu einer Kopplung des Wischblatts mit einem Wischarm eines Wischers, insbesondere Scheibenwischers, mit zumindest einer in dem Wischblatt integrierten Sprüheinheit und mit zumindest einer Waschwasserverteilereinheit zu einer Zuführung von Waschwasser zu der Sprüheinheit, insbesondere zu zumindest im Wesentlichen parallel zu einer Haupterstreckungsrichtung des Wischblatts entlang des Wischblatts angeordneten Düsenelementen der Sprüheinheit, wobei die Waschwasserverteilereinheit zumindest ein Kanalkupplungselement zu einer, insbesondere für eine Durchleitung eines Fluids vorgesehenen, vorzugsweise fluiddichten, Kupplung zumindest eines Teils der Waschwasserverteilereinheit mit einem Waschwasserkanal der Sprüheinheit aufweist, und wobei die Waschwasserverteilereinheit zumindest ein Adapterkupplungselement zu einer, insbesondere für eine Durchleitung eines Fluids vorgesehenen, vorzugsweise fluiddichten, Kupplung zumindest eines weiteren Teils der Waschwasserverteilereinheit mit einem weiteren Waschwasserkanal der Adaptereinheit aufweist.

Es wird vorgeschlagen, dass der weitere Waschwasserkanal zumindest teilweise durch die Adaptereinheit ausgebildet ist. Durch die erfindungsgemäße Ausgestaltung der Wischblattvorrichtung kann vorteilhaft eine Wischblattvorrichtung mit vorteilhaften Reinigungseigenschaften erreicht werden. Insbesondere kann eine vorteilhafte Zuleitung und/oder Verteilung von Waschwasser, insbesondere zu einer Sprüheinheit eines Wischblatts, ermöglicht werden, wodurch eine besonders effektive Reinigung einer durch das Wischblatt bearbeiteten Scheibe ermöglicht werden kann. Zudem kann durch die erfindungsgemäße Ausgestaltung der Wischblattvorrichtung vorteilhaft eine hohe Dichtheit der Waschwasserverteilereinheit erreicht werden. Außerdem kann vorteilhaft eine Montage, insbesondere eines Wischblatts mit einer Sprüheinheit, erleichtert werden, insbesondere indem zumindest ein Waschwasserkanal, vorzugsweise ein Großteil aller Waschwasserkanäle schlauchfrei ausgebildet sind. Zudem kann, insbesondere durch eine, insbesondere einstückige, Ausbildung eines weiteren Waschwasserkanals als fester Teil der Adaptereinheit, vorteilhaft eine Komplexität reduziert werden, insbesondere durch eine Reduzierung einer gesamten Teileanzahl, wodurch insbesondere Produktions- und/oder Montagekosten gesenkt werden können.

Unter einer "Wischblattvorrichtung" soll insbesondere zumindest ein Teil, insbesondere eine Unterbaugruppe, eines Wischblatts verstanden werden, wobei insbesondere zusätzlich auch Zubehöreinheiten für das Wischblatt umfasst sein können, wie beispielsweise eine Sprüheinheit, zumindest ein Waschwasserkanal, zumindest ein Teil einer Waschwasserverteilereinheit und/oder zumindest ein Teil einer Adaptereinheit. Insbesondere kann die Wischblattvorrichtung auch das gesamte Wischblatt, insbesondere mit der Adaptereinheit, umfassen. Unter der "Adaptereinheit" soll insbesondere eine Einheit verstanden werden, welche dazu vorgesehen ist, eine Kopplung des Wischblatts mit zumindest einem Wischarm herzustellen. Insbesondere umfasst die Adaptereinheit zumindest einen Wischarmadapter. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Wischarmadapter" soll in diesem Zusammenhang insbesondere ein Adapter verstanden werden, der eine Montagestelle zu einer Montage eines Wischarms mit der Adaptereinheit bereitstellt. Insbesondere weist der Wischarmadapter zumindest eine Wischarmaufnahme zu einer zumindest teilweisen Aufnahme zumindest eines Teils des Wischarms auf. Insbesondere ist eine mittels des Wischarmadapters hergestellte Verbindung zwischen dem Wischarm und der Adaptereinheit lösbar. Es ist beispielsweise denkbar, dass die Adaptereinheit ein Betätigungselement, beispielsweise einen Knopf aufweist, mittels welchem eine Verbindung des Wischarmadapters zerstörungsfrei gelöst werden kann. Der Wischarmadapter ist insbesondere nicht zerstörungsfrei von der Adaptereinheit lösbar. Zudem kann die Adaptereinheit insbesondere einen Wischblattadapter aufweisen. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden ist. Vorzugsweise ist das Wischblatt fest, bevorzugt nicht zerstörungsfrei lösbar, mit dem Wischblattadapter verbunden. Dadurch kann vorteilhaft eine einfache Montage von Wischblatt und Wischarm ermöglicht werden. Insbesondere sind der Wischblattadapter und der Wischarmadapter in der Adaptereinheit mittels einer Haltefeder verbunden.

Insbesondere sind der Wischblattadapter und der Wischarmadapter gegeneinander beweglich, insbesondere zumindest teilweise rotierbar, gelagert. Vorzugsweise ist mittels der Adaptereinheit das Wischblatt zumindest teilweise rotierbar gegenüber dem Wischarm gelagert. Unter "zumindest teilweise rotierbar" soll insbesondere um einen maximalen Rotationswinkel von zumindest 5°, vorzugsweise von zumindest 10°, vorteilhaft von zumindest 12°, bevorzugt von zumindest 15° und besonders bevorzugt von höchstens 20° rotierbar verstanden werden. Insbesondere ist das Wischblatt gegenüber einer Ruheposition im Uhrzeigersinn und/oder gegen den Uhrzeigersinn rotierbar, wobei vorzugsweise eine der Rotationsrichtungen eine größere, insbesondere zumindest viermal, vorzugsweise zumindest fünfmal, bevorzugt zumindest sechsmal und besonders bevorzugt zumindest siebenmal größere Rotationsfreiheit aufweist, d.h. dass der maximal mögliche Rotationswinkel in eine der Rotationsrichtungen entsprechend größer ist. Insbesondere ist das Wischblatt um eine Rotationsachse rotierbar, welche senkrecht zu einer Haupterstreckungsrichtung des Wischblatts und parallel zu einer Wischebene des Wischblatts verläuft. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter einer "Wischebene" soll insbesondere eine Ebene verstanden werden, welche in einem Wischbetrieb des Wischers von einer Unterseite des Wischblatts, insbesondere einer Wischlippe, überstrichen wird. Insbesondere ist die Rotation des Wischblatts gegenüber dem Wischarm in zumindest einer Rotationsrichtung durch einen Anschlag, welcher insbesondere an der Haltefeder, an dem Wischarmadapter und/oder an dem Wischblattadapter angeordnet ist, begrenzt. Insbesondere ist die Haltefeder zu einer Rückauslenkung eines ausgelenkten Wischblatts in eine Ausgangs- und/oder Ruheposition vorgesehen.

Unter einer "Sprüheinheit" soll in diesem Zusammenhang insbesondere eine Einheit verstanden werden, die zumindest ein Düsenelement umfasst. Bevorzugt umfasst die Sprüheinheit zumindest zwei Düsenelemente, welche insbesondere in einer Reihe angeordnet sind. Besonders bevorzugt sind die Düsenelemente seitlich an einer oder an beiden langen Seite/n einer Wischleiste des Wischblatts angeordnet. Unter einem "Düsenelement" soll in diesem Zusammenhang insbesondere ein Element verstanden werden, das dazu vorgesehen ist, Waschwasser, insbesondere auf eine Scheibe, auszubringen, beziehungsweise in eine bestimmte Richtung zu sprühen. Insbesondere weist das Düsenelement zumindest eine Düsenöffnung auf, die ein Waschwassersystem zu einer Umgebung hin öffnet. Das Düsenelement kann aus einem Metall und/oder besonders vorteilhaft aus einem Kunststoff hergestellt sein. Bevorzugt ist das Düsenelement dazu vorgesehen, mit einem Waschwasserkanal der Sprüheinheit gekoppelt zu werden. Darunter, dass die Sprüheinheit "in dem Wischblatt integriert ist", soll insbesondere verstanden werden, dass die Bauteile der Sprüheinheit, insbesondere die Düsenelemente, unlösbar mit dem Wischblatt verbunden sind, insbesondere nicht zerstörungsfrei von dem Wischblatt trennbar sind. Insbesondere sind die Düsenelemente als, insbesondere entlang dem Wischblatt, zumindest abschnittsweise gleichmäßig und/oder ungleichmäßig verteilt angeordnete Öffnungen ausgebildet, welche insbesondere zumindest schräg in Richtung einer Wischebene des Wischblatts ausgerichtet sind. Alternativ oder zusätzlich ist vorstellbar, dass zumindest ein weiteres Düsenelement außerhalb des Wischblatts angeordnet ist, beispielsweise in der Adaptereinheit und/oder in einer Endkappe des Wischblatts.

Unter einer "Waschwasserverteilereinheit" soll insbesondere eine Einheit verstanden werden, welche der Wischblattvorrichtung zugeführtes Waschwasser zumindest teilweise durch eine Adaptereinheit und/oder ein Wischblatt zu der Sprüheinheit leitet. Insbesondere teilt die Waschwasserverteilereinheit das zugeführte Waschwasser so auf, dass bei einem Sprühbetrieb der Sprüheinheit an ausgewählten und/oder an allen Düsenelementen vergleichbare Waschwasserdrücke auftreten. Dadurch kann vorteilhaft eine gute und/oder gleichmäßige Reinigungsleistung erzielt werden. Insbesondere weist die Waschwasserverteilereinheit zumindest eine Waschwasserzuführung zu einem Anschluss einer externen Waschwasserquelle auf. Insbesondere weist die Waschwasserverteilereinheit zumindest eine, bevorzugt zumindest zwei, Waschwasserausleitungen auf, welche z.B. mit Waschwasserkanälen der Sprüheinheit verbunden sein können. Vorzugsweise sind zwei Waschwasserausleitungen zumindest im Wesentlichen in entgegengesetzte Richtungen parallel zu der Haupterstreckungsrichtung des Wischblatts ausgerichtet. Insbesondere sind Waschwasserzuleitungen und Waschwasserausleitungen zumindest im Wesentlichen parallel zueinander ausgerichtet, insbesondere in einer Projektion auf die Wischebene gesehen.

Unter einem "Kanalkupplungselement" soll insbesondere ein Element der Waschwasserverteilereinheit verstanden werden, welches zu einer waschwasserdichten, insbesondere kraft- und/oder formschlüssigen, Verbindung eines waschwasserführenden Waschwasserkanals der Sprüheinheit mit einem Teil der Waschwasserverteilereinheit vorgesehen ist. Insbesondere kann das Kanalkupplungselement dazu vorgesehen sein, eine, insbesondere zugfeste, Rohrkupplung auszubilden. Insbesondere kann das Kanalkupplungselement zumindest ein Formschlusselement umfassen, welches vorzugsweise als eine Kante ausgebildet ist, die dazu vorgesehen sein kann, zumindest teilweise in eine Vertiefung des Waschwasserkanals der Sprüheinheit einzugreifen. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Das Kanalkupplungselement ist insbesondere aus einem zumindest im Wesentlichen formstabilen Material, beispielsweise einem Kunststoff und/oder einem Metall, ausgebildet. Der Waschwasserkanal der Sprüheinheit kann insbesondere zumindest teilweise als ein Schlauch und/oder zumindest teilweise als ein Hohlraum in dem Wischblatt ausgebildet sein.

Unter einem "Adapterkupplungselement" soll insbesondere ein Element der Waschwasserverteilereinheit verstanden werden, welches zu einer waschwasserdichten, insbesondere kraft- und/oder formschlüssigen, Verbindung eines waschwasserführenden weiteren Waschwasserkanals der Adaptereinheit mit einem Teil der Waschwasserverteilereinheit vorgesehen ist. Insbesondere kann das Adapterkupplungselement dazu vorgesehen sein, eine Rohrkupplung auszubilden. Insbesondere kann das Adapterkupplungselement mittels zumindest eines Formschlusselements kraft- und/oder formschlüssig mit der Adaptereinheit, insbesondere dem Wischarmadapter, vorzugsweise fluiddicht mit einer Ausnehmung in dem Wischarmadapter, verbunden sein. Vorzugsweise weist das Adapterkupplungselement an einer zur Kupplung mit der Adaptereinheit vorgesehenen Kupplungsstelle eine Dichtung, insbesondere eine Dichtkante, auf, mittels welcher das Adapterkupplungselement fluiddicht mit dem weiteren Waschwasserkanal der Adaptereinheit verbindbar ist. Alternativ oder zusätzlich kann die Dichtung auch einen Dichtring, beispielsweise einen O-Ring, und/oder eine weitere dem Fachmann geläufige Dichtung umfassen. Der weitere Waschwasserkanal der Adaptereinheit ist insbesondere als ein Hohlraum in der Adaptereinheit, insbesondere des Wischarmadapters, ausgebildet. Das Adapterkupplungselement ist insbesondere dazu vorgesehen, zumindest teilweise in den Hohlraum der Adaptereinheit, insbesondere des Wischarmadapters, einzugreifen. Vorzugsweise ist das mit der Adaptereinheit verbundene Adapterkupplungselement positionsfest relativ zu einem Teil der Adaptereinheit, insbesondere zu dem Wischarmadapter. Eine Position des Adapterkupplungselements ist insbesondere von einer Relativbewegung des Wischblatts gegenüber dem Wischarmadapter unbeeinflusst. Eine Außenform des Adapterkupplungselements ist insbesondere zumindest teilweise an eine Form des Hohlraums der Adaptereinheit, insbesondere des Wischarmadapters, angepasst und weist insbesondere einen zu einem Querschnitt des Hohlraums der Adaptereinheit, insbesondere des Wischarmadapters, komplementären Querschnitt auf. Der weitere Waschwasserkanal der Adaptereinheit weist insbesondere starre und/oder steife Wände auf. Der Wischarmadapter ist vorzugsweise als ein Spritzgussteil mit hohlraumartigen Kanälen zu einer Waschwasserführung, insbesondere dem weiteren Waschwasserkanal und einem Waschwasserzuleitungskanal, ausgebildet.

Darunter, dass der weitere Waschwasserkanal der Adaptereinheit "zumindest teilweise durch die Adaptereinheit ausgebildet ist", soll insbesondere verstanden werden, dass zumindest 60 %, vorzugsweise zumindest 80 %, bevorzugt zumindest 85 % und besonders bevorzugt zumindest 95 % der den weiteren Waschwasserkanal begrenzenden Elemente, insbesondere Wände, einstückig mit der Adaptereinheit, insbesondere mit dem Wischarmadapter der Adaptereinheit, ausgebildet sind. Der weitere Waschwasserkanal der Adaptereinheit ist insbesondere schlauchfrei ausgebildet. Dadurch kann vorteilhaft eine Notwendigkeit eines Ein- und/oder Ausfädelns und/oder eines Ein- und/oder Ausrenkens von waschwasserführenden Bauteilen bei einer Montage und/oder Demontage vermieden werden.

Ferner wird vorgeschlagen, dass die Adaptereinheit in einem montierten Zustand zumindest im Wesentlichen unverlierbar, insbesondere zumindest im Wesentlichen unlösbar, mit dem Wischblatt verbunden ist. Dadurch kann vorteilhaft eine Komplexität reduziert werden. Insbesondere kann eine Montage und/oder ein Austausch eines Wischblatts an einem Wischarm erleichtert werden. Dadurch können vorteilhaft Kosten, insbesondere für einen Endkunden, welcher einen Wischblattwechsel vornehmen lässt, reduziert werden. Unter "zumindest im Wesentlichen unlösbar" soll hier insbesondere eine Verbindung von zumindest zwei Elementen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Insbesondere sind unlösbare Elemente nicht zerstörungsfrei voneinander trennbar. Insbesondere ist der Wischblattadapter zumindest im Wesentlichen unverlierbar, insbesondere zumindest im Wesentlichen unlösbar, mit dem Wischblatt verbunden. Insbesondere ist der Wischblattadapter zumindest im Wesentlichen unverlierbar, insbesondere zumindest im Wesentlichen unlösbar, mit dem Wischarmadapter und/oder mit der Haltefeder verbunden. Insbesondere ist der Wischarmadapter zerstörungsfrei lösbar mit dem Wischarm verbindbar.

Nach der Erfindung wird vorgeschlagen, dass die Waschwasserverteilereinheit einen einstückig mit dem Wischarmadapter der Adaptereinheit, ausgebildeten Waschwasserzuleitungskanal aufweist, welcher gewinkelt, insbesondere zumindest im Wesentlichen senkrecht, zu dem weiteren Waschwasserkanal der Adaptereinheit angeordnet ist. Dadurch kann vorteilhaft eine Wischblattvorrichtung mit vorteilhaften Reinigungseigenschaften erreicht werden. Insbesondere kann vorteilhaft eine besonders platzsparende Anordnung der Waschwasserverteilereinheit ermöglicht werden, wodurch beispielweise gute Strömungseigenschaften, wie beispielsweise ein geringer Luftwiderstand gegen einen auf die Wischblattvorrichtung anströmenden Fahrwind, erreicht werden können. Der Waschwasserzuleitungskanal ist insbesondere als eine längliche, in Umfangsrichtung bewandete Ausnehmung in dem Wischarmadapter ausgebildet, welche über eine Öffnung mit dem weiteren Waschwasserkanal verbunden ist. Insbesondere ist der weitere Waschwasserkanal der Adaptereinheit, insbesondere eine Haupterstreckungsrichtung des weiteren Waschwasserkanals der Adaptereinheit, im montierten, insbesondere unbewegten, Zustand zumindest im Wesentlichen senkrecht zu dem Wischblatt, insbesondere zu der Haupterstreckungsrichtung des Wischblatts, ausgerichtet. Insbesondere ist der weitere Waschwasserkanal der Adaptereinheit, insbesondere eine Haupterstreckungsrichtung des weiteren Waschwasserkanals der Adaptereinheit, zumindest im Wesentlichen senkrecht zu dem Waschwasserzuleitungskanal, insbesondere zu einer Haupterstreckungsrichtung des Waschwasserzuleitungskanals, ausgerichtet. Insbesondere ist der weitere Waschwasserkanal der Adaptereinheit und/oder der Waschwasserzuleitungskanal, insbesondere eine Haupterstreckungsrichtung des weiteren Waschwasserkanals der Adaptereinheit und/oder des Waschwasserzuleitungskanals, im montierten Zustand zumindest im Wesentlichen senkrecht zu der Rotationsachse des Wischblatts ausgerichtet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweisen. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt.

Weiterhin wird vorgeschlagen, dass das Kanalkupplungselement und das Adapterkupplungselement durch zumindest eine zumindest teilweise flexible Waschwasserleitung, insbesondere fluidführend und/oder fluiddicht, verbunden sind. Dadurch kann vorteilhaft eine Flexibilität erhöht werden. Insbesondere kann vorteilhaft eine Rotierbarkeit des Wischblatts gegenüber dem Wischarm und/oder dem Wischarmadapter erreicht werden, welche insbesondere fluiddicht ist. Unter "teilweise flexibel" soll insbesondere zumindest zu 50 %, vorzugsweise zumindest zu 75 % und bevorzugt zumindest zu 90 % flexibel verstanden werden. Die zumindest teilweise flexible Waschwasserleitung ist insbesondere zumindest teilweise aus einem flexiblen und/oder elastisch verformbaren Material, beispielsweise einem Gummi, ausgebildet. Insbesondere kann die flexible Waschwasserleitung als ein gummischlauchartiges Element ausgebildet sein, welches getrennt von dem Kanalkupplungselement und/oder dem Adapterkupplungselement und/oder zumindest teilweise einstückig mit dem Kanalkupplungselement und/oder dem Adapterkupplungselement ausgebildet ist. Unter der Wendung "fluidführend verbunden" soll insbesondere einen gemeinsamen Fluidkanal ausbildend verstanden werden.

Des Weiteren wird vorgeschlagen, dass das Adapterkupplungselement mit zumindest einer weiteren flexiblen Waschwasserleitung, insbesondere fluidführend und/oder fluiddicht, gekoppelt ist. Dadurch kann vorteilhaft eine Flexibilität weiter erhöht werden. Insbesondere kann Waschwasser vorteilhaft über einen großen Bereich verteilt werden. Die zumindest eine weitere flexible Waschwasserleitung ist vorzugsweise zumindest im Wesentlichen identisch zu der flexiblen Waschwasserleitung ausgebildet. Insbesondere kann die flexible Waschwasserleitung als ein gummischlauchartiges Element ausgebildet sein, welches getrennt von dem Kanalkupplungselement, dem Adapterkupplungselement und/oder der flexiblen Waschwasserleitung und/oder zumindest teilweise einstückig mit dem Kanalkupplungselement, dem Adapterkupplungselement und/oder der flexiblen Waschwasserleitung ausgebildet ist.

Weiterhin wird vorgeschlagen, dass das Adapterkupplungselement ein Dichtelement, insbesondere eine Dichtkante, zu einer wasserdichten Kupplung zumindest mit dem weiteren Waschwasserkanal der Adaptereinheit aufweist. Dadurch kann vorteilhaft eine gute Dichtigkeit der waschwasserführenden Elemente, insbesondere nach einer Verbindung von Wischarm und Wischblatt erreicht werden, wodurch vorteilhaft eine hohe Betriebssicherheit erreicht werden kann. Das Dichtelement, insbesondere die Dichtkante, des Adapterkupplungselements ist als Verjüngung eines Kuppelbereichs des Adapterkupplungselements mit dem weiteren Waschwasserkanal der Adaptereinheit ausgebildet. Das Dichtelement, insbesondere die Dichtkante, des Adapterkupplungselements ist insbesondere zumindest im Wesentlichen pilzförmig ausgebildet. Alternativ oder zusätzlich kann das Dichtelement des Adapterkupplungselements weitere Dichtungen, wie Gummidichtungen oder weitere dem Fachmann geläufige Dichtungen umfassen. Insbesondere weist der weitere Waschwasserkanal der Adaptereinheit eine Einengung auf. Die Einengung des weiteren Waschwasserkanals ist insbesondere an das Dichtelement, insbesondere die Dichtkante, des Adapterkupplungselements angepasst, bzw. zumindest teilweise komplementär zu dem Dichtelement, insbesondere der Dichtkante, des Adapterkupplungselements ausgebildet. Eine Verpressung der Einengung und des Dichtelements, insbesondere der Dichtkante, des Adapterkupplungselements führt insbesondere zu einer wasserdichten Verbindung des Adapterkupplungselements mit dem weiteren Waschwasserkanal.

Nach der Erfindung wird vorgeschlagen, dass das Adapterkupplungselement eine Verrastungsvorrichtung zu einer Positionierung des Adapterkupplungselements relativ zu der Adaptereinheit aufweist. Dadurch kann vorteilhaft eine einfache Montage ermöglicht werden. Die Verrastungsvorrichtung ist insbesondere als eine Anordnung ineinandergreifender Rastelemente, welche insbesondere von dem Adapterkupplungselement und/oder von der Adaptereinheit, vorzugsweise dem Wischarmadapter, ausgebildet sind, ausgebildet. Die Rastelemente sind vorzugsweise als Rasthaken ausgebildet. Alternativ oder zusätzlich kann die Verrastungsvorrichtung auch alternative Fixierungen umfassen, beispielsweise Verschraubungen und/oder Verklebungen.

Außerdem wird vorgeschlagen, dass die Verrastungsvorrichtung, insbesondere zumindest ein Rastelement der Verrastungsvorrichtung, zu einer Fixierung des Adapterkupplungselements in dem weiteren Waschwasserkanal der Adaptereinheit vorgesehen ist. Dadurch kann vorteilhaft ein guter Vereisungsschutz ermöglicht werden, insbesondere indem ein Herausdrücken des Adapterkupplungselements aus dem weiteren Waschwasserkanal bei einer Vereisung des Waschwassers in der Waschwasserverteilereinheit unterbunden werden kann. Dadurch kann vorteilhaft eine hohe Betriebssicherheit erreicht werden. Vorzugsweise unterbinden Rastelemente der Verrastungsvorrichtung eine Bewegung des Adapterkupplungselements relativ zu der Adaptereinheit, insbesondere in eine Einsteckrichtung des Adapterkupplungselements in dem weiteren Waschwasserkanal der Adaptereinheit.

Ferner wird vorgeschlagen, dass die Adaptereinheit einen Wischarmadapter zu einer Kopplung mit einem Wischarm eines Wischers, insbesondere Scheibenwischers, aufweist, welcher rotationsfest mit dem Adapterkupplungselement verbunden ist. Dadurch kann vorteilhaft eine wasserdichte, rotierbare Kopplung von Wischblatt und Wischarm ermöglicht werden, welche insbesondere besonders einfach aufgebaut ist. Vorteilhaft sind rotationsermöglichende Teile vollständig in einem Bauteil, insbesondere dem die Adaptereinheit beinhaltenden Wischblatt angeordnet, wodurch insbesondere eine Montage und/oder Demontage vereinfacht werden kann. Insbesondere kann die Montage und/oder Demontage frei von Aus- und/oder Einfädelvorgängen und/oder Aus- und/oder Einrenkvorgängen stattfinden. Unter "rotationsfest verbunden" soll insbesondere eine Verbindung verstanden werden, mittels welcher zwei Teile so zueinander positionierbar sind, dass Relativbewegungen der zwei Teile bei einem normalen Betrieb und/oder einer normalen Benutzung ausgeschlossen sind.

Außerdem wird vorgeschlagen, dass die Adaptereinheit einen Wischarmadapter zu einer Kopplung mit einem Wischarm eines Wischers, insbesondere Scheibenwischers, aufweist, wobei das zumindest eine Kanalkupplungselement relativ zu dem Wischarmadapter beweglich ist. Insbesondere ist das zumindest eine Kanalkupplungselement relativ zu dem Wischarmadapter rotatorisch um die Rotationsachse beweglich. Dadurch kann vorteilhaft eine wasserdichte, rotierbare Kopplung von Wischblatt und Wischarm ermöglicht werden, welche insbesondere besonders einfach aufgebaut ist. Vorteilhaft sind rotationsermöglichende Teile vollständig in einem Bauteil, insbesondere dem die Adaptereinheit beinhaltenden Wischblatt, angeordnet, wodurch insbesondere eine Montage und/oder Demontage vereinfacht werden kann. Insbesondere kann die Montage und/oder Demontage frei von Aus- und/oder Einfädelvorgängen und/oder Aus- und/oder Einrenkvorgängen stattfinden. Insbesondere kann ein weiteres Kanalkupplungselement der Waschwasserverteilereinheit abhängig und/oder unabhängig von dem zumindest einen Kanalkupplungselement beweglich sein. Insbesondere ist das Kanalkupplungselement beweglich relativ zu dem Adapterkupplungselement. Insbesondere bewirkt eine Rotation und/oder Bewegung des Kanalkupplungselements relativ zu dem Adapterkupplungselement und/oder relativ zu dem Wischarmadapter eine elastische Verformung der flexiblen Waschwasserleitung.

Zudem wird vorgeschlagen, dass das Kanalkupplungselement, das Adapterkupplungselement, die flexible Waschwasserleitung, die weitere flexible Waschwasserleitung und/oder ein weiteres Kanalkupplungselement der Waschwasserverteilereinheit als ein einstückiges Waschwasserverteilerelement der Waschwasserverteilereinheit ausgebildet sind. Dadurch kann vorteilhaft eine Komplexität reduziert werden, insbesondere indem eine Gesamtzahl an Teilen reduziert werden kann. Zudem kann vorteilhaft eine Lebensdauer erhöht werden, insbesondere indem auf verschleiß- und/oder fehleranfällige Kupplungen und/oder Verbindungselemente verzichtet werden kann.

Wenn das Waschwasserverteilerelement als ein Mehrfarbenspritzgussteil ausgebildet ist, können vorteilhaft Produktionskosten und/oder Stückkosten gering gehalten werden, was insbesondere bei einem Verschleißteil wie einem Wischblatt, welches regelmäßig gewechselt werden muss, stark ins Gewicht fällt. Insbesondere ist das Waschwasserverteilerelement als ein Zweifarbenspritzgussteil ausgebildet, wobei die Kanalkupplungselemente und das Adapterkupplungselement zumindest teilweise, insbesondere vorwiegend, aus einem formstabilen Material und die flexiblen Waschwasserleitungen zumindest teilweise, insbesondere vorwiegend, aus einem flexiblen, beispielsweise gummiartigen Material, ausgebildet sind.

Weiterhin wird vorgeschlagen, dass die Waschwasserverteilereinheit eine, insbesondere schlauchfreie, Schnellkuppelvorrichtung zu einer fluiddichten Kupplung der Waschwasserverteilereinheit mit einer externen Waschwasserzuleitung aufweist. Dadurch kann vorteilhaft eine einfache und/oder schnelle Montage und/oder Demontage ermöglicht werden, wodurch insbesondere Montage- und/oder Austauschkosten gering gehalten werden können. Zudem kann vorteilhaft eine Komplexität verringert werden. Die Schnellkuppelvorrichtung ist zumindest teilweise einstückig mit der Adaptereinheit, insbesondere dem Wischarmadapter der Adaptereinheit, ausgebildet. Die externe Waschwasserzuleitung ist insbesondere als ein starres Zuleitungsrohr, welches insbesondere an dem Wischarm angeordnet ist, ausgebildet. Die Schnellkuppelvorrichtung ermöglicht vorteilhaft eine fluiddichte Verbindung der Waschwasserverteilereinheit mit einer Waschwasserzuleitung eines Wischarms, welche insbesondere frei ist von Einfädel-, Ausfädel-, Einrenk-, Ausrenk- und/oder Biegevorgängen, sowie frei ist von Drehbewegungen und/oder Schraubverbindungen. Die Schnellkuppelvorrichtung umfasst insbesondere ein Verbindungselement zu einer kraft- und/oder formschlüssigen Verbindung des Wischarms mit dem Wischarmadapter, beispielsweise eine Clips-Verbindung zu einem Einclipsen eines Wischarms in den Wischarmadapter. Vorzugsweise führt ein Einclipsen des Wischarms in den Wischarmadapter zu einem gleichzeitigen, fluiddichten Verschluss der waschwasserführenden Teile von Wischarm und Wischarmadapter. Vorzugsweise umfasst die Schnellkuppelvorrichtung ein Entriegelungselement, beispielsweise einen Entriegelungsknopf, mittels welchem eine Verbindung zwischen Wischarm und Wischblatt und/oder zwischen der Waschwasserverteilereinheit und der externen Zuleitung gelöst werden kann.

Zudem wird vorgeschlagen, dass die Schnellkuppelvorrichtung zumindest einen Aufnahmekanal zu einer Aufnahme einer, insbesondere steifen und/oder rohrförmigen, externen Waschwasserzuleitung eines Wischarms eines Wischers, insbesondere Scheibenwischers, aufweist. Dadurch kann vorteilhaft eine einfache Handhabung erreicht werden, insbesondere indem eine wasserdichte Verbindung zwischen Wischarm und Wischblatt mittels einer einfachen Schiebebewegung herstellbar ist. Der Aufnahmekanal ist insbesondere identisch mit dem Waschwasserzuleitungskanal des Wischarmadapters.

Wenn der Aufnahmekanal zumindest eine Einführungsschräge aufweist, kann vorteilhaft eine einfache, schnelle und/oder sichere Montage ermöglicht werden, insbesondere indem die externe Waschwasserzuleitung selbsttätig in eine richtige Endposition geleitet werden kann. Dadurch kann vorteilhaft eine wasserdichte, waschwasserleitende Verbindung zwischen dem Wischarm und dem Wischblatt sichergestellt werden. Insbesondere bildet der Aufnahmekanal eine Montageschiene zu einer Unterstützung einer Montage des Wischblatts mit dem Wischarm aus. Dadurch ähnelt eine Montage der erfindungsgemäßen Wischblattvorrichtung, insbesondere des Scheibenwischer-Wischblatts, vorteilhaft einer gängigen Montagemethode für Wischblätter, wodurch Fehlmontagen vorteilhaft verhindert werden können.

Vorteilhaft ist bei einer Kupplung mittels der Schnellkuppelvorrichtung der Aufnahmekanal durch ein Dichtelement, insbesondere eine Dichtkante, der externen Waschwasserzuleitung wasserdicht mit der externen Waschwasserzuleitung verbindbar. Dadurch kann insbesondere eine gute Dichtigkeit der waschwasserführenden Elemente, insbesondere nach einer Verbindung von Wischarm und Wischblatt, erreicht werden, wodurch vorteilhaft eine hohe Betriebssicherheit erreicht werden kann. Das Dichtelement, insbesondere die Dichtkante, der externen Waschwasserzuleitung ist insbesondere als eine Verjüngung der externen Waschwasserzuleitung, insbesondere in einem äußeren Endbereich der externen Waschwasserzuleitung, ausgebildet. Das Dichtelement, insbesondere die Dichtkante, der externen Waschwasserzuleitung ist insbesondere zumindest im Wesentlichen pilzförmig ausgebildet. Alternativ oder zusätzlich kann das Dichtelement der externen Waschwasserzuleitung weitere Dichtungen, wie Gummidichtungen oder weitere dem Fachmann geläufige Dichtungen umfassen. Insbesondere weist der Aufnahmekanal eine Einengung, vorzugsweise in einem inneren Endbereich des Aufnahmekanals und/oder in einem Nahbereich des Übergangs und/oder der Öffnung vom Aufnahmekanal zum weiteren Waschwasserkanal, auf. Die Einengung des Aufnahmekanals ist insbesondere an die Verjüngung der externen Waschwasserzuleitung angepasst, bzw. zumindest teilweise komplementär zu der Verjüngung der externen Waschwasserzuleitung ausgebildet. Eine Verpressung eines Endbereichs der externen Waschwasserzuleitung mit dem Dichtelement, insbesondere der Dichtkante, der externen Waschwasserzuleitung führt insbesondere zu einer wasserdichten Verbindung der externen Waschwasserzuleitung mit dem Aufnahmekanal und/oder dem weiteren Waschwasserkanal.

Zudem wird vorgeschlagen, dass die Adaptereinheit einen Wischarmadapter zu einer Kopplung mit einem Wischarm eines Wischers, insbesondere Scheibenwischers, aufweist, welcher eine Clips-Verbindung zu einer Verbindung mit dem Wischarm umfasst, wobei die Clips-Verbindung dazu vorgesehen ist, eine Einführtiefe für eine externe Waschwasserzuleitung des Wischarms in den Aufnahmekanal vorzugeben. Dadurch kann vorteilhaft eine einfache Handhabung, insbesondere eine einfache und sichere Montage, ermöglicht werden. Insbesondere kann eine Montage von Wischarm und Wischblatt frei von besonderem Aufwand zur Herstellung eines Waschwasseranschlusses erfolgen, insbesondere da eine Verbindung und Abdichtung automatisch zusammen mit einem Einclipsen des Wischarms in die Clips-Verbindung geschieht. Eine Clips-Verbindung ist insbesondere als eine zumindest formschlüssige Verbindung ausgebildet. Bei einer Verbindung mittels der Clips-Verbindung greifen Wischarm und Wischarmadapter zumindest teilweise ineinander ein und werden durch ein Verrasten relativ zueinander fixiert. Die Verbindung zwischen der externen Waschwasserzuleitung und dem weiteren Waschwasserkanal und/oder dem Aufnahmekanal ist vorzugsweise frei von verrastenden Verbindungselementen. Insbesondere wird die Verbindung zwischen der externen Waschwasserzuleitung und dem weiteren Waschwasserkanal und/oder dem Aufnahmekanal durch die Clips-Verbindung des Wischarms mit dem Wischarmadapter gehalten.

Nach der Erfindung wird vorgeschlagen, dass das Kanalkupplungselement und/oder ein weiteres Kanalkupplungselement der Waschwasserverteilereinheit einen gewinkelten Verlauf aufweisen. Dadurch kann vorteilhaft eine besonders kompakte Bauweise ermöglicht werden. Zudem kann vorteilhaft eine besonders einfache Montage und/oder Demontage der Wischblattvorrichtung, insbesondere der Waschwasserverteilereinheit, ermöglicht werden. Darunter, dass ein Kanalkupplungselement einen "gewinkelten Verlauf" aufweist, soll insbesondere verstanden werden, dass zumindest ein fluidführender Kanal und/oder Hohlraum des Kanalkupplungselements zumindest einen von einem linearen Verlauf abweichenden Abschnitt aufweist, wobei insbesondere ein Fluidstrom innerhalb des Abschnitts zumindest wesentlich aus einem linearen Verlauf abgelenkt wird. Vorzugsweise beträgt die Ablenkung des Fluidstroms innerhalb des Kanalkupplungselements zumindest mehr als 60°, bevorzugt zumindest mehr als 75°. Vorzugsweise weist der fluidführende Kanal und/oder Hohlraum des Kanalkupplungselements einen Knick auf.

Des Weiteren wird vorgeschlagen, dass der gewinkelte Verlauf des Kanalkupplungselements und/oder des weiteren Kanalkupplungselements einen Knick und/oder eine starke Krümmung mit einem Winkel umfasst, welcher zumindest im Wesentlichen einem rechten Winkel entspricht. Dadurch kann vorteilhaft eine besonders kompakte Bauweise ermöglicht werden. Zudem kann vorteilhaft eine besonders einfache Montage und/oder Demontage der Wischblattvorrichtung, insbesondere der Waschwasserverteilereinheit, ermöglicht werden, insbesondere indem eine Montagebewegung zumindest im Wesentlichen parallel zu der Haupterstreckungsrichtung des Wischblatts, insbesondere des Waschwasserkanals, gerichtet ist. Unter einem Winkel, welcher "im Wesentlichen einem rechten Winkel entspricht", soll insbesondere ein Winkel verstanden werden, welcher von einem 90° Winkel höchstens um 8°, vorzugsweise um höchstens 5°, bevorzugt um höchstens 3° und besonders bevorzugt um höchstens 1° abweicht. Der Winkel ist insbesondere als ein Winkel des Knicks (Knickwinkel) oder als ein Gesamtwinkel der Krümmung (Krümmungswinkel) ausgebildet.

Zusätzlich wird vorgeschlagen, dass der Waschwasserkanal ein Verbindungselement aufweist, welches zumindest zu einer Herstellung einer fluiddichten Verbindung zwischen dem Waschwasserkanal und der Waschwasserverteilereinheit mittels eines formschlüssigen Eingriffs in das Kanalkupplungselement und/oder in ein weiteres Kanalkupplungselement vorgesehen ist. Dadurch kann vorteilhaft eine besonders einfache Montage und/oder Demontage ermöglicht werden. Vorteilhaft kann eine werkzeuglose Montage und/oder Demontage ermöglicht werden. Das Verbindungselement ist insbesondere als eine Art Stutzen ausgebildet, welcher insbesondere dazu vorgesehen ist, in eine, insbesondere eine Passform aufweisende, Ausnehmung eines der Kanalkupplungselemente einzugreifen.

Ferner wird ein Wischer, insbesondere Scheibenwischer, mit einer Wischblattvorrichtung vorgeschlagen. Dadurch kann vorteilhaft ein Wischer mit vorteilhaften Reinigungseigenschaften erreicht werden.

Die erfindungsgemäße Wischblattvorrichtung soll hierbei nicht auf die oben beschriebene Anwendung und Ausführungsform beschränkt sein. Insbesondere kann die erfindungsgemäße Wischblattvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, perspektivische Ansicht eines Wischers mit einem Wischarm und einer Wischblattvorrichtung,
- Fig. 2: eine schematische Ansicht von unten auf die Wischblattvorrichtung,
- Fig. 3: eine schematische, teilweise Schnittansicht der Wischblattvorrichtung,
- Fig. 4: eine schematische, teilweise Schnittansicht der Wischblattvorrichtung mit eingeführter externer Waschwasserzuleitung,
- Fig. 5: eine schematische Ansicht von unten auf eine alternative Wischblattvorrichtung mit einer alternativen Waschwasserverteilereinheit,
- Fig. 6a: eine schematische Seitenansicht eines alternativen Kanalkupplungselements der alternativen Wischblattvorrichtung und
- Fig. 6b: eine schematische Seitenansicht eines weiteren alternativen Kanalkupplungselements.

### Beschreibung der Ausführungsbeispiele

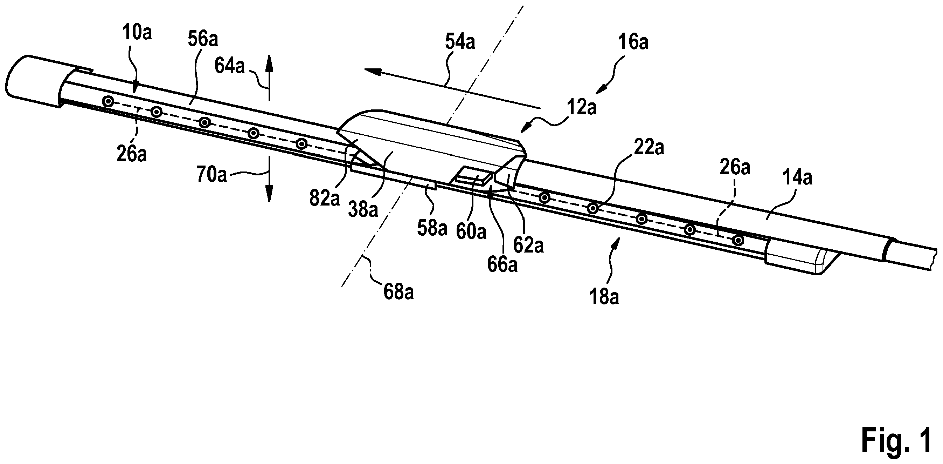

Fig. 1 zeigt einen Wischer 16a mit einem Wischarm 14a und einer Wischblattvorrichtung. Die Wischblattvorrichtung weist ein Wischblatt 10a auf. Das Wischblatt 10a weist eine Haupterstreckungsrichtung 54a auf. Das Wischblatt 10a weist eine Wischblattleiste 56a auf.

Die Wischblattvorrichtung weist eine Sprüheinheit 18a auf. Die Sprüheinheit 18a ist zu einem Versprühen von Waschwasser vorgesehen. Die Sprüheinheit 18a ist in dem Wischblatt 10a integriert. Die Sprüheinheit 18a weist Düsenelemente 22a auf. Die Düsenelemente 22a sind als Austrittsöffnungen ausgebildet, aus welchen Waschwasser bei einer Aktivierung der Sprüheinheit 18a austreten kann. Die Düsenelemente 22a sind in der Haupterstreckungsrichtung 54a des Wischblatts 10a entlang dem Wischblatt 10a angeordnet. Die Düsenelemente 22a sind zumindest im Wesentlichen regelmäßig voneinander beabstandet.

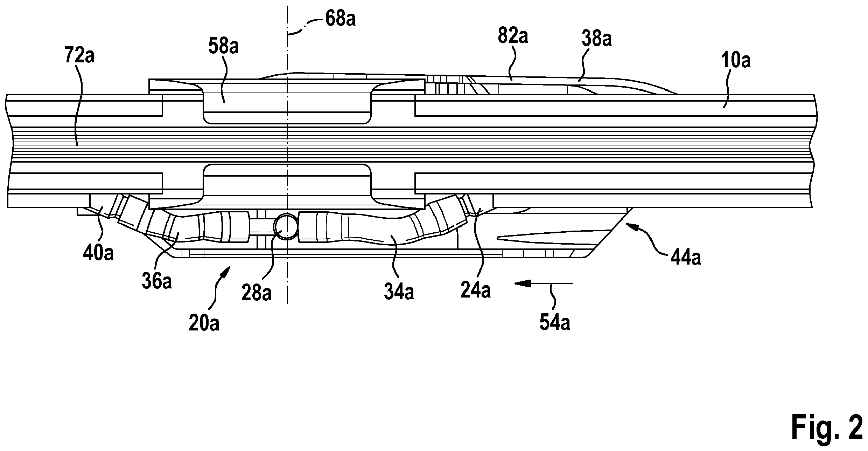

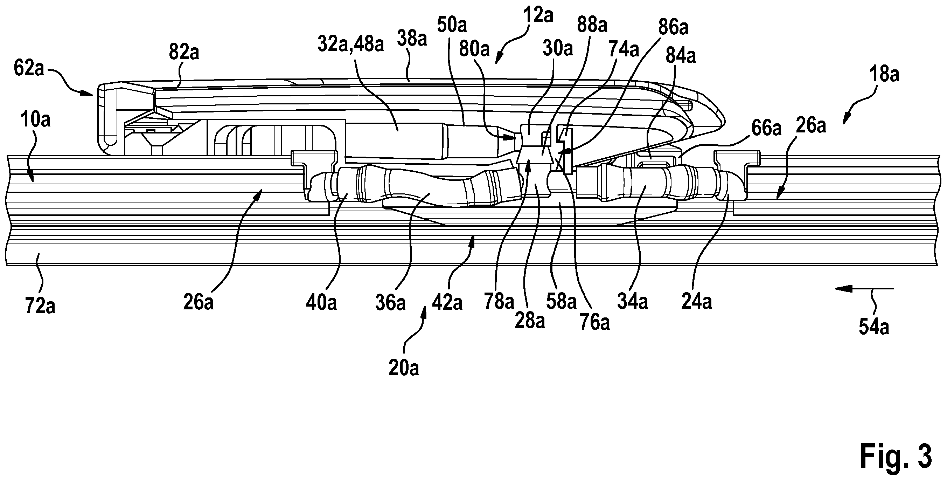

Die Wischblattvorrichtung weist eine Adaptereinheit 12a auf. Die Adaptereinheit 12a ist zu einer Kopplung des Wischblatts 10a mit einem Wischarm 14a des Wischers 16a vorgesehen. Die Adaptereinheit 12a ist in einem montierten Zustand unverlierbar mit dem Wischblatt 10a verbunden. Die Adaptereinheit 12a ist in dem montierten Zustand unlösbar mit dem Wischblatt 10a verbunden. Die Adaptereinheit 12a weist einen Wischblattadapter 58a auf. Der Wischblattadapter 58a ist mit dem Wischblatt 10a unlösbar gekoppelt. Die Adaptereinheit 12a weist einen Wischarmadapter 38a auf. Der Wischarmadapter 38a ist lösbar mit dem Wischarm 14a gekoppelt. Der Wischarmadapter 38a ist zu einer Kopplung der Adaptereinheit 12a mit dem Wischarm 14a des Wischers 16a vorgesehen. Die Adaptereinheit 12a weist eine Haltefeder 66a auf. Die Haltefeder 66a ist unlösbar mit dem Wischarmadapter 38a gekoppelt. Die Haltefeder 66a ist unlösbar mit dem Wischblattadapter 58a gekoppelt. Die Haltefeder 66a erlaubt eine rotatorische Auslenkung des Wischblatts 10a relativ zu dem Wischarm 14a und/oder dem Wischarmadapter 38a um eine Rotationsachse 68a. Das Wischblatt 10a kann auf einer vom Wischarm 14a im zum Wischer 16a montierten Zustand wegzeigenden Seite in einer von einer Wischlippe 72a (vgl. Fig. 2) des Wischblatts 10a wegzeigenden Richtung 64a um bis zu 15° geschwenkt werden. In einer auf die Wischlippe 72a zuweisenden Richtung 70a beträgt der maximale Schwenkwinkel 2°. Die Haltefeder 66a weist ein Anschlagelement 84a auf (vgl. Fig. 3). Das Anschlagelement 84a ist zu einer Begrenzung der rotatorischen Auslenkung des Wischblatts 10a relativ zu dem Wischarm 14a und/oder dem Wischarmadapter 38a vorgesehen. Das Anschlagelement 84a kontaktiert im Anschlag den Wischarmadapter 38a.

Die Adaptereinheit 12a weist ein Betätigungselement 60a auf. Das Betätigungselement 60a ist zu einer Entriegelung der Kopplung zwischen Wischarm 14a und Wischarmadapter 38a vorgesehen. Der Wischarmadapter 38a weist eine Wischarmaufnahme 62a auf. Die Wischarmaufnahme 62a ist zu einer Aufnahme eines Teils des Wischarms 14a vorgesehen. Die Wischarmaufnahme 62a ist zu einer Aufnahme eines Endes des Wischarms 14a vorgesehen. Zu einer Verbindung zwischen Wischarm 14a und Adaptereinheit 12a wird der Wischarm 14a in die Wischarmaufnahme 62a entlang der Haupterstreckungsrichtung 54a eingeführt. Die Wischarmaufnahme 62a und der Wischarm 14a weisen Formschlusselemente (nicht gezeigt) zu einer Bildung einer Clips-Verbindung zwischen Wischarm 14a und Adaptereinheit 12a auf. Eine Betätigung des Betätigungselements 60a hebt den Formschluss auf und erlaubt ein Herausziehen des Wischarms 14a aus der Wischarmaufnahme 62a. Das Wischblatt 10a und die Adaptereinheit 12a sind als ein einzelnes zusammenhängendes Bauteil ausgebildet, welches bei einem Wechsel des Wischblatts 10a komplett ausgetauscht wird. Der Wischarmadapter 38a weist ein Gehäuse 82a auf. Das Gehäuse 82a weist eine aerodynamische Außenform auf. Die aerodynamische Außenform ist für eine Luftanströmung aus einer Richtung parallel zu der Rotationsachse 68a optimiert.

Fig. 2 zeigt eine Unteransicht der Wischblattvorrichtung. Das Wischblatt 10a weist die Wischlippe 72a auf. Die Wischlippe 72a ist dazu vorgesehen, bei einem Wischvorgang einen berührenden Kontakt zu einer zu wischenden Scheibe auszubilden. Die Wischblattvorrichtung weist eine Waschwasserverteilereinheit 20a auf. Die Waschwasserverteilereinheit 20a ist zu einer Durchleitung eines Fluids, beispielsweise Waschwasser, vorgesehen. Die Waschwasserverteilereinheit 20a ist zu einer Zuführung von Waschwasser zu der Sprüheinheit 18a vorgesehen.

Fig. 3 zeigt eine seitliche teilweise Schnittansicht der Wischblattvorrichtung. Das Wischblatt 10a und die Adaptereinheit 12a sind geschnitten dargestellt. Die Waschwasserverteilereinheit 20a ist nicht geschnitten dargestellt. Die Waschwasserverteilereinheit 20a weist ein Kanalkupplungselement 24a und ein weiteres Kanalkupplungselement 40a auf. Die Kanalkupplungselemente 24a, 40a sind zu einer fluidführenden Kupplung eines Teils der Waschwasserverteilereinheit 20a mit einem Waschwasserkanal 26a der Sprüheinheit 18a vorgesehen (vgl. auch Fig. 1). Der Waschwasserkanal 26a der Sprüheinheit 18a verbindet die Düsenelemente 22a. Mittels dem Waschwasserkanal 26a der Sprüheinheit 18a wird Waschwasser zu den Düsenelementen 22a geführt. Der Waschwasserkanal 26a der Sprüheinheit 18a ist in dem Wischblatt 10a integriert. Das Wischblatt 10a weist zwei Waschwasserkanäle 26a auf, je einen auf jeder Seite der Adaptereinheit 12a. Die Kanalkupplungselemente 24a, 40a bilden eine fluiddichte Kupplung zur Führung von Waschwasser aus. Die Kanalkupplungselemente 24a, 40a sind relativ zu dem Wischarmadapter 38a beweglich gelagert.

Die Waschwasserverteilereinheit 20a weist ein Adapterkupplungselement 28a auf. Das Adapterkupplungselement 28a bildet eine fluiddichte Kupplung zur Führung von Waschwasser aus. Das Adapterkupplungselement 28a ist zu einer fluidführenden Kupplung eines weiteren Teils der Waschwasserverteilereinheit 20a mit einem weiteren Waschwasserkanal 30a der Adaptereinheit 12a vorgesehen. Das Adapterkupplungselement 28a ist in eine Öffnung 78a des weiteren Waschwasserkanals 30a eingesteckt. Das Adapterkupplungselement 28a weist ein Dichtelement 88a auf. Das Dichtelement 88a des Adapterkupplungselements 28a ist als eine Dichtkante ausgebildet. Das Dichtelement 88a des Adapterkupplungselements 28a ist pilzförmig ausgebildet. Das Dichtelement 88a des Adapterkupplungselements 28a ist als pilzförmige Verjüngung einer wischarmadapterseitigen Öffnung des Adapterkupplungselements 28a ausgebildet. Das Dichtelement 88a des Adapterkupplungselements 28a ist zu einer wasserdichten Kupplung mit dem weiteren Waschwasserkanal 30a der Adaptereinheit 12a vorgesehen. Das Dichtelement 88a des Adapterkupplungselements 28a ist in eine vertikale Öffnung des weiteren Waschwasserkanals 30a der Adaptereinheit 12a eingesteckt. Der weitere Waschwasserkanal 30a der Adaptereinheit 12a weist auf einer Innenseite eine zu dem Dichtelement 88a des Adapterkupplungselements 28a korrespondierende Wandoberfläche auf, mit welcher das Dichtelement 88a des Adapterkupplungselements 28a bei einer Montage verpresst wird.

Das Adapterkupplungselement 28a weist eine Verrastungsvorrichtung 86a auf. Die Verrastungsvorrichtung 86a ist zu einer Positionierung des Adapterkupplungselements 28a relativ zu der Adaptereinheit 12a vorgesehen. Das Adapterkupplungselement 28a weist ein Rastelement 74a auf. Die Verrastungsvorrichtung 86a weist ein Rastelement 74a auf. Die Verrastungsvorrichtung 86a ist zu einer Fixierung des Adapterkupplungselements 28a in dem weiteren Waschwasserkanal 30a der Adaptereinheit 12a vorgesehen. Die Verrastungsvorrichtung 86a verhindert ein Herausdrücken des Adapterkupplungselements 28a aus dem weiteren Waschwasserkanal 30a der Adaptereinheit 12a durch eine Ausdehnung von Waschwasser bei einem Einfrieren des Waschwassers. Das Rastelement 74a ist als Rasthaken ausgebildet. Der Wischarmadapter 38a weist ein korrespondierendes Rastelement 76a auf. Das korrespondierende Rastelement 76a ist als ein Rasthaken ausgebildet. Das Rastelement 74a und das korrespondierende Rastelement 76a greifen ineinander ein. Das Adapterkupplungselement 28a ist mittels des Rastelements 74a an dem Wischarmadapter 38a positionsfest fixiert. Das Adapterkupplungselement 28a ist rotationsfest mit dem Wischarmadapter 38a verbunden.

Die Waschwasserverteilereinheit 20a weist eine flexible Waschwasserleitung 34a auf. Die flexible Waschwasserleitung 34a ist dazu vorgesehen, eine Rotation des Wischblatts 10a um die Rotationsachse 68a zu erlauben. Die flexible Waschwasserleitung 34a ist zwischen dem Kanalkupplungselement 24a und dem Adapterkupplungselement 28a angeordnet. Die flexible Waschwasserleitung 34a verbindet das Kanalkupplungselement 24a mit dem Adapterkupplungselement 28a. Die flexible Waschwasserleitung 34a ist fluiddicht mit dem Adapterkupplungselement 28a verbunden. Die flexible Waschwasserleitung 34a ist fluiddicht mit dem Kanalkupplungselement 24a verbunden. Die Waschwasserverteilereinheit 20a weist eine weitere flexible Waschwasserleitung 36a auf. Die weitere flexible Waschwasserleitung 36a ist zwischen dem weiteren Kanalkupplungselement 40a und dem Adapterkupplungselement 28a angeordnet. Die weitere flexible Waschwasserleitung 36a verbindet das weitere Kanalkupplungselement 40a mit dem Adapterkupplungselement 28a. Die weitere flexible Waschwasserleitung 36a ist fluiddicht mit dem Adapterkupplungselement 28a verbunden. Die weitere flexible Waschwasserleitung 36a ist fluiddicht mit dem weiteren Kanalkupplungselement 40a verbunden.

Die Waschwasserverteilereinheit 20a weist ein Waschwasserverteilerelement 42a auf. Das Waschwasserverteilerelement 42a ist einstückig ausgebildet. Das Waschwasserverteilerelement 42a ist als ein Mehrfarbenspritzgussteil ausgebildet. Das Waschwasserverteilerelement 42a ist als ein Zweifarbenspritzgussteil ausgebildet. Die flexiblen Waschwasserleitungen 34a, 36a sind gummiartig gespritzt. Das Adapterkupplungselement 28a ist hartplastikartig gespritzt. Die Kanalkupplungselemente 24a, 40a sind hartplastikartig gespritzt. Das Kanalkupplungselement 24a und die flexible Waschwasserleitung 34a bilden einen Teil des Waschwasserverteilerelements 42a aus. Das Kanalkupplungselement 24a und die flexible Waschwasserleitung 34a sind einstückig zueinander ausgebildet. Das Adapterkupplungselement 28a bildet einen Teil des Waschwasserverteilerelements 42a aus. Das Adapterkupplungselement 28a ist einstückig mit der flexiblen Waschwasserleitung 34a ausgebildet. Die weitere Waschwasserleitung 36a bildet einen Teil des Waschwasserverteilerelements 42a aus. Das Adapterkupplungselement 28a ist einstückig mit der weiteren flexiblen Waschwasserleitung 36a ausgebildet. Das weitere Kanalkupplungselement 40a bildet einen Teil des Waschwasserverteilerelements 42a aus. Das weitere Kanalkupplungselement 40a ist einstückig mit der weiteren flexiblen Waschwasserleitung 36a ausgebildet. Alternativ kann zumindest die flexible Waschwasserleitung 34a und/oder die weitere flexible Waschwasserleitung 36a getrennt von dem Adapterkupplungselement 28a und/oder den Kanalkupplungselementen 24a, 40a ausgebildet sein. Beispielsweise könnte zumindest eine der flexiblen Waschwasserleitungen 34a, 36a als ein separater Gummischlauch ausgebildet sein, welcher auf Schlauchstutzen des Adapterkupplungselements 28a und/oder der Kanalkupplungselemente 24a, 40a stülpbar ist.

Der weitere Waschwasserkanal 30a ist teilweise durch die Adaptereinheit 12a ausgebildet. Der weitere Waschwasserkanal 30a ist als ein Hohlraum in der Adaptereinheit 12a ausgebildet. Der weitere Waschwasserkanal 30a ist teilweise durch den Wischarmadapter 38a ausgebildet. Der weitere Waschwasserkanal 30a ist als ein Hohlraum in dem Wischarmadapter 38a ausgebildet. Der weitere Waschwasserkanal 30a ist einstückig mit der Adaptereinheit 12a ausgebildet. Der weitere Waschwasserkanal 30a ist einstückig mit dem Wischarmadapter 38a ausgebildet. Der weitere Waschwasserkanal 30a weist eine weitere Öffnung 80a auf. Die weitere Öffnung 80a des weiteren Waschwasserkanals 30a ist in einem 90 Grad Winkel zu der Öffnung 78a des weiteren Waschwasserkanals 30a angeordnet.

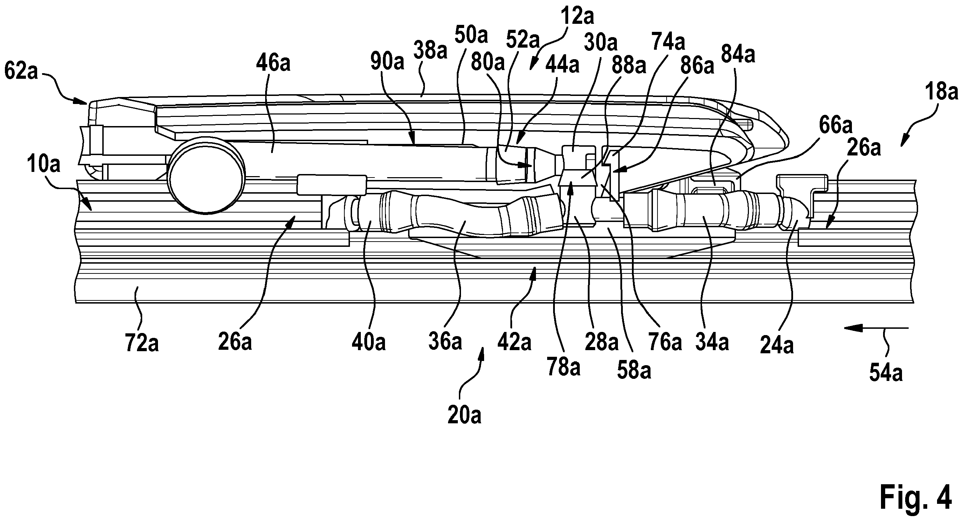

Die Waschwasserverteilereinheit 20a weist einen Waschwasserzuleitungskanal 32a auf. Der Waschwasserzuleitungskanal 32a ist gewinkelt zu dem weiteren Waschwasserkanal 30a der Adaptereinheit 12a angeordnet. Ein Winkel zwischen dem weiteren Waschwasserkanal 30a der Adaptereinheit 12a und dem Waschwasserzuleitungskanal 32a beträgt 90°. Der Waschwasserzuleitungskanal 32a ist zumindest teilweise durch die Adaptereinheit 12a ausgebildet. Der Waschwasserzuleitungskanal 32a ist einstückig mit der Adaptereinheit 12a ausgebildet. Der Waschwasserzuleitungskanal 32a ist einstückig mit dem Wischarmadapter 38a ausgebildet. Der Waschwasserzuleitungskanal 32a ist über die weitere Öffnung 80a mit dem weiteren Waschwasserkanal 30a verbunden. Der Waschwasserzuleitungskanal 32a verläuft zumindest im Wesentlichen parallel zu der Haupterstreckungsrichtung 54a des Wischblatts 10a. Der Waschwasserzuleitungskanal 32a weist an einem der weiteren Öffnung 80a zum weiteren Waschwasserkanal 30a gegenüberliegenden Ende eine Aufnahmeöffnung zu einer Aufnahme einer externen Waschwasserzuleitung 46a auf (vgl. Fig. 4). Der Waschwasserzuleitungskanal 32a ist in Richtung der weiteren Öffnung 80a zu dem weiteren Waschwasserkanal 30a hin verjüngt.

Die Waschwasserverteilereinheit 20a weist eine Strömungsrichtung auf, in welche in einem Sprühbetrieb der Sprüheinheit 18a Waschwasser die Waschwasserverteilereinheit 20a durchströmt. Der Waschwasserzuleitungskanal 32a ist in Strömungsrichtung stromaufwärts von dem weiteren Waschwasserkanal 30a, von dem Adapterkupplungselement 28a, von den Kanalkupplungselementen 24a, 40a und von der Sprüheinheit 18a bzw. den Waschwasserkanälen 26a der Sprüheinheit 18a angeordnet. Der weitere Waschwasserkanal 30a ist in Strömungsrichtung stromaufwärts von dem Adapterkupplungselement 28a, von den Kanalkupplungselementen 24a, 40a und von der Sprüheinheit 18a bzw. den Waschwasserkanälen 26a der Sprüheinheit 18a angeordnet. Die Kanalkupplungselemente 24a, 40a sind in Strömungsrichtung stromaufwärts von der Sprüheinheit 18a bzw. den Waschwasserkanälen 26a der Sprüheinheit 18a angeordnet.

Fig. 4 zeigt die Wischblattvorrichtung mit in den Waschwasserzuleitungskanal 32a eingeführter externer Waschwasserzuleitung 46a. Die Waschwasserverteilereinheit 20a weist eine Schnellkuppelvorrichtung 44a auf. Die Schnellkuppelvorrichtung 44a ist schlauchfrei ausgebildet. Die Schnellkuppelvorrichtung 44a ist zu einer fluiddichten Kupplung der Waschwasserverteilereinheit 20a mit der externen Waschwasserzuleitung 46a vorgesehen. Die Schnellkuppelvorrichtung 44a ist zu einer fluiddichten Kupplung des Waschwasserzuleitungskanals 32a mit der externen Waschwasserzuleitung 46a vorgesehen. Der Wischarm 14a weist die externe Waschwasserzuleitung 46a auf. Die externe Waschwasserzuleitung 46a ist als ein starres Rohr ausgebildet. Die externe Waschwasserzuleitung 46a ist mit dem Wischarm 14a gekoppelt. Die externe Waschwasserzuleitung 46a ist positionsfest relativ zu dem Wischarm 14a an dem Wischarm 14a angeordnet. Die Kopplung der externen Waschwasserzuleitung 46a mit dem Wischarm 14a ist lösbar. Eine Verbindung des Wischarms 14a mit der Adaptereinheit 12a führt gleichzeitig zu einer Kupplung der Schnellkuppelvorrichtung 44a.

Die Schnellkuppelvorrichtung 44a weist einen Aufnahmekanal 48a auf. Der Aufnahmekanal 48a ist zu einer Aufnahme der externen Waschwasserzuleitung 46a des Wischarms 14a vorgesehen. Der Aufnahmekanal 48a ist identisch mit dem Waschwasserzuleitungskanal 32a. Bei einer Montage des Wischarms 14a mit dem Wischblatt 10a wird die externe Waschwasserzuleitung 46a in den Aufnahmekanal 48a bzw. den Waschwasserzuleitungskanal 32a durch seitliches Einschieben entlang der Haupterstreckungsrichtung 54a eingeführt. Der Aufnahmekanal 48a weist eine Einführungsschräge 50a auf. Die Einführungsschräge 50a ist zu einer Unterstützung einer Positionierung der externen Waschwasserzuleitung 46a relativ zu der Adaptereinheit 12a vorgesehen. Der Aufnahmekanal 48a bildet eine Montageschiene 90a aus. Die Montageschiene 90a dient zu einer Unterstützung einer Montage des Wischblatts 10a an dem Wischarm 14a. Die Montageschiene 90a ist dazu vorgesehen, eine Bewegung zum Einstecken des Wischarms 14a in die Adaptereinheit 12a vorzugeben und/oder zu führen. Die Montageschiene 90a erleichtert ein seitliches Einschieben des Wischarms 14a in die Wischarmaufnahme 62a und/oder der externen Waschwasserzuleitung 46a in den Aufnahmekanal 48a.

Der Wischarmadapter 38a umfasst eine Clips-Verbindung (nicht gezeigt) zu einer Verbindung mit dem Wischarm 14a. Die Clips-Verbindung ist dazu vorgesehen, eine Einführtiefe für die externe Waschwasserzuleitung 46a des Wischarms 14a in den Aufnahmekanal 48a vorzugeben. Die Schnellkuppelvorrichtung 44a ist frei von einer weiteren Clips-Verbindung. Ein Schließen der Clips-Verbindung legt eine Position der externen Waschwasserzuleitung 46a in dem Aufnahmekanal 48a fest. Die Länge und/oder die optimale Einführtiefe der externen Waschwasserzuleitung 46a sind mit einer Einführtiefe des Wischarms 14a in der Wischarmaufnahme 62a abgestimmt.

Die externe Waschwasserzuleitung 46a weist ein Dichtelement 52a auf. Das Dichtelement 52a der externen Waschwasserzuleitung 46a ist als eine Dichtkante ausgebildet. Das Dichtelement 52a der externen Waschwasserzuleitung 46a ist pilzförmig ausgebildet. Das Dichtelement 52a der externen Waschwasserzuleitung 46a ist als pilzförmige Verjüngung eines Endes der externen Waschwasserzuleitung 46a ausgebildet. Das Dichtelement 52a der externen Waschwasserzuleitung 46a ist zu einer wasserdichten Kupplung mit dem Aufnahmekanal 48a vorgesehen. Das Dichtelement 52a der externen Waschwasserzuleitung 46a ist in den durch die Einführungsschräge 50a verjüngten Aufnahmekanal 48a, insbesondere mittels einer seitlichen Schiebebewegung, eingesteckt. Der weitere Aufnahmekanal 48a weist auf einer Innenseite eine zu dem Dichtelement 52a der externen Waschwasserzuleitung 46a korrespondierende Wandoberfläche auf, mit welcher das Dichtelement 88a des Adapterkupplungselements 28a bei einer Montage verpresst wird. Das Dichtelement 52a der externen Waschwasserzuleitung 46a wird bei einer Verbindung mittels der Schnellkuppelvorrichtung 44a mit der Einführungsschräge 50a des Aufnahmekanals 48a verpresst. Bei einer Kupplung mittels der Schnellkuppelvorrichtung 44a ist der Aufnahmekanal 48a durch das Dichtelement 52a der externen Waschwasserzuleitung 46a wasserdicht mit der externen Waschwasserzuleitung 46a verbindbar. Bei einem Lösen des Wischarms 14a von der Adaptereinheit 12a mittels der Clips-Verbindung wird gleichzeitig die wasserdichte Verbindung der Schnellkuppelvorrichtung 44a getrennt.

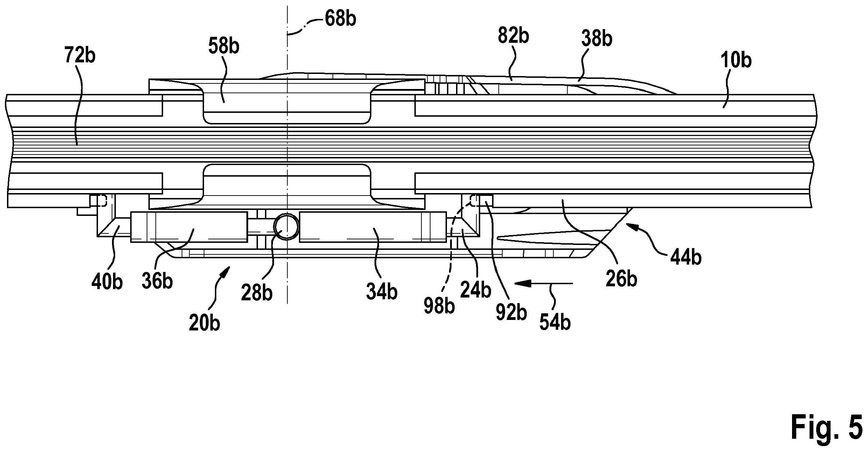

In den Figuren 5 bis 6b ist ein Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 6b ist der Buchstabe a durch den Buchstaben b ersetzt.

Fig. 5 zeigt eine alternative Wischblattvorrichtung mit einer alternative Waschwasserverteilereinheit 20b. Die Waschwasserverteilereinheit 20b weist ein Kanalkupplungselement 24b auf. Die Waschwasserverteilereinheit 20b weist ein weiteres Kanalkupplungselement 40b auf. Das Kanalkupplungselement 24b und das weitere Kanalkupplungselement 40b weisen einen gewinkelten Verlauf auf.

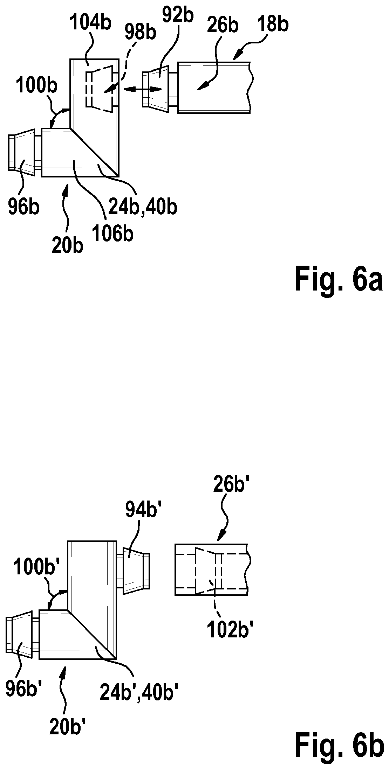

Das Kanalkupplungselement 24b und das weitere Kanalkupplungselement 40b weisen einen Knick auf. Der gewinkelte Verlauf des Kanalkupplungselements 24b und/oder des weiteren Kanalkupplungselements 40b bildet einen Winkel 100b aus, welcher zumindest im Wesentlichen einem rechten Winkel entspricht (vgl. auch Fig. 6a). Das Kanalkupplungselement 24b, 40b umfasst zwei Schenkel 104b, 106b. Die Schenkel 104b, 106b des Kanalkupplungselements 24b, 40b spannen den Winkel 100b auf. Die Schenkel 104b, 106b des Kanalkupplungselements 24b, 40b sind zueinander senkrecht ausgerichtet.

Die Wischblattvorrichtung weist eine Sprüheinheit 18b auf. Die Sprüheinheit 18b umfasst einen Waschwasserkanal 26b. Der Waschwasserkanal 26b weist ein Verbindungselement 92b auf. Das Verbindungselement 92b des Waschwasserkanals 26b ist dazu vorgesehen, zumindest eine formschlüssige und fluiddichte Verbindung des Waschwasserkanals 26b mit dem Kanalkupplungselement 24b, 40b herzustellen. Das Verbindungselement 92b des Waschwasserkanals 26b ist als ein Stutzen ausgebildet. Das Kanalkupplungselement 24b und/oder das weitere Kanalkupplungselement 40b weist eine Aufnahme 98b auf. Das Verbindungselement 92b des Waschwasserkanals 26b ist dazu vorgesehen, zu der fluiddichten Kopplung in die Aufnahme 98b des Kanalkupplungselements 24b, 40b einzugreifen. Bei einer Montage der Wischblattvorrichtung wird das Verbindungselement 92b des Waschwasserkanals 26b in die Aufnahme 98b des Kanalkupplungselements 24b, 40b entlang einer Einsteckrichtung, welche zumindest im Wesentlichen parallel zu einer Haupterstreckungsrichtung 54b eines Wischblatts 10b verläuft (vgl. Fig. 5), eingesteckt. Die Aufnahme 98b des Kanalkupplungselements 24b, 40b und das Verbindungselement 92b des Waschwasserkanals 26b sind komplementär zueinander ausgebildet. Das Kanalkupplungselement 24b, 40b weist ein Verbindungselement 96b auf. Das Verbindungselement 96b des Kanalkupplungselements 24b, 40b ist dazu vorgesehen, zumindest eine formschlüssige und fluiddichte Verbindung des Kanalkupplungselements 24b, 40b mit einer flexiblen Waschwasserleitung 34b, 36b herzustellen. Das Verbindungselement 96b des Kanalkupplungselements 24b, 40b ist als ein Stutzen ausgebildet. Das Verbindungselement 96b des Kanalkupplungselements 24b, 40b ist dazu vorgesehen, zumindest formschlüssig in die jeweilige benachbarte flexible Waschwasserleitung 34b, 36b eingesteckt.

Fig. 6b zeigt eine alternative Ausführung des Kanalkupplungselements 24b`, 40b`. Das alternative Kanalkupplungselement 24b' 40b` weist ein weiteres Verbindungselement 94b` auf. Das weitere Verbindungselement 94b` des Kanalkupplungselements 24b`, 40b` ist anstelle der Aufnahme aus der Fig. 6a angeordnet. Das weitere Verbindungselement 94b` des Kanalkupplungselements 24b`, 40b` ist dazu vorgesehen, zumindest eine formschlüssige und fluiddichte Verbindung des Kanalkupplungselements 24b`, 40b` mit einem alternativen Waschwasserkanal 26b' herzustellen. Das weitere Verbindungselement 94b` des Kanalkupplungselements 24b`, 40b` ist als ein Stutzen ausgebildet. Das weitere Verbindungselement 94b` des Kanalkupplungselements 24b`, 40b` ist dazu vorgesehen, zumindest formschlüssig in eine Aufnahme 102` des Waschwasserkanals 26b' eingesteckt zu werden. Die Aufnahme 102b` des Waschwasserkanals 26b' und das weitere Verbindungselement 94b` des Kanalkupplungselements 24b`, 40b` sind komplementär zueinander ausgebildet.

## Patentansprüche

1. Wischblattvorrichtung, insbesondere Scheibenwischer-Wischblattvorrichtung, mit zumindest einem Wischblatt (10a; 10b), mit zumindest einer Adaptereinheit (12a; 12b) zu einer Kopplung des Wischblatts (10a; 10b) mit einem Wischarm (14a; 14b) eines Wischers (16a; 16b), insbesondere Scheibenwischers, mit zumindest einer in dem Wischblatt (10a; 10b) integrierten Sprüheinheit (18a; 18b) und mit zumindest einer Waschwasserverteilereinheit (20a; 20b; 20b') zu einer Zuführung von Waschwasser zu der Sprüheinheit (18a; 18b), insbesondere zu zumindest im Wesentlichen parallel zu einer Haupterstreckungsrichtung (54a; 54b) des Wischblatts (10a; 10b) entlang des Wischblatts (10a; 10b) angeordneten Düsenelementen (22a; 22b) der Sprüheinheit (18a; 18b), wobei die Waschwasserverteilereinheit (20a; 20b; 20b') zumindest ein Kanalkupplungselement (24a; 24b; 24b') zu einer, insbesondere für eine Durchleitung eines Fluids vorgesehenen, vorzugsweise fluiddichten, Kupplung zumindest eines Teils der Waschwasserverteilereinheit (20a; 20b; 20b') mit einem Waschwasserkanal (26a; 26b; 26b') der Sprüheinheit (18a; 18b) aufweist, und wobei die Waschwasserverteilereinheit (20a; 20b; 20b') zumindest ein Adapterkupplungselement (28a; 28b) zu einer, insbesondere für eine Durchleitung eines Fluids vorgesehenen, vorzugsweise fluiddichten, Kupplung zumindest eines weiteren Teils der Waschwasserverteilereinheit (20a; 20b; 20b') mit einem weiteren Waschwasserkanal (30a; 30b) der Adaptereinheit (12a; 12b) aufweist, wobei der weitere Waschwasserkanal (30a; 30b) zumindest teilweise durch die Adaptereinheit (12a; 12b) ausgebildet ist, wobei die Waschwasserverteilereinheit (20a; 20b; 20b') einen einstückig mit einem Wischarmadapter (38a; 38b) der Adaptereinheit (12a; 12b) ausgebildeten Waschwasserzuleitungskanal (32a; 32b) aufweist, welcher gewinkelt zu dem weiteren Waschwasserkanal (30a; 30b) der Adaptereinheit (12a; 12b) angeordnet ist, wobei das Kanalkupplungselement (24b; 24b') und/oder ein weiteres Kanalkupplungselement (40b, 40b') der Waschwasserverteilereinheit (20b; 20b') einen gewinkelten Verlauf aufweisen, **dadurch gekennzeichnet dass** das Adapterkupplungselement (28a; 28b) eine Verrastungsvorrichtung (86a; 86b) zu einer Positionierung des Adapterkupplungselements (28a; 28b) relativ zu der Adaptereinheit (12a; 12b) aufweist.

2. Wischblattvorrichtung nach Anspruch 1, **dadurch gekennzeichnet, dass** die Adaptereinheit (12a; 12b) in einem montierten Zustand zumindest im Wesentlichen unverlierbar, insbesondere zumindest im Wesentlichen unlösbar, mit dem Wischblatt (10a; 10b) verbunden ist.

3. Wischblattvorrichtung nach einem der vorhergehenden Ansprüche,
**dadurch gekennzeichnet, dass** das Kanalkupplungselement (24a; 24b; 24b') und das Adapterkupplungselement (28a; 28b) durch zumindest eine zumindest teilweise flexible Waschwasserleitung (34a; 34b) verbunden sind.

4. Wischblattvorrichtung nach Anspruch 3,
**dadurch gekennzeichnet, dass** das Adapterkupplungselement (28a; 28b) mit zumindest einer weiteren flexiblen Waschwasserleitung (36a; 36b) gekoppelt ist.

5. Wischblattvorrichtung nach einem der vorhergehenden Ansprüche,
**dadurch gekennzeichnet, dass** das Adapterkupplungselement (28a; 28b) ein Dichtelement (88a; 88b), insbesondere eine Dichtkante, zu einer wasserdichten Kupplung zumindest mit dem weiteren Waschwasserkanal (30a; 30b) der Adaptereinheit (12a; 12b) aufweist.

6. Wischblattvorrichtung nach Anspruch 5, **dadurch gekennzeichnet, dass** die Verrastungsvorrichtung (86a; 86b), insbesondere zumindest ein Rastelement (74a; 74b) der Verrastungsvorrichtung (86a; 86b), zu einer Fixierung des Adapterkupplungselements (28a; 28b) in dem weiteren Waschwasserkanal (30a; 30b) der Adaptereinheit (12a; 12b) vorgesehen ist.

7. Wischblattvorrichtung nach einem der vorhergehenden Ansprüche,
**dadurch gekennzeichnet, dass** die Adaptereinheit (12a; 12b) einen Wischarmadapter (38a; 38b) zu einer Kopplung mit einem Wischarm (14a; 14b) eines Wischers (16a; 16b) aufweist, welcher rotationsfest mit dem Adapterkupplungselement (28a; 28b) verbunden ist.

8. Wischblattvorrichtung nach einem der vorhergehenden Ansprüche,
**dadurch gekennzeichnet, dass** die Adaptereinheit (12a; 12b) einen Wischarmadapter (38a; 38b) zu einer Kopplung mit einem Wischarm (14a; 14b) eines Wischers (16a; 16b) aufweist, wobei das zumindest eine Kanalkupplungselement (24a; 24b; 24b') relativ zu dem Wischarmadapter (38a; 38b) beweglich ist.

9. Wischblattvorrichtung nach einem der vorhergehenden Ansprüche,
**dadurch gekennzeichnet, dass** das Kanalkupplungselement (24a; 24b; 24b'), das Adapterkupplungselement (28a; 28b), die flexible Waschwasserleitung (34a; 34b), die weitere flexible Waschwasserleitung (36a; 36b) und/oder ein weiteres Kanalkupplungselement (40a; 40b; 40b') der Waschwasserverteilereinheit (20a; 20b; 20b') als ein einstückiges Waschwasserverteilerelement (42a; 42b) der Waschwasserverteilereinheit (20a; 20b; 20b') ausgebildet sind.

10. Wischblattvorrichtung nach Anspruch 9, **dadurch gekennzeichnet, dass** das Waschwasserverteilerelement (42a; 42b) als ein Mehrfarbenspritzgussteil ausgebildet ist.

11. Wischblattvorrichtung nach einem der vorhergehenden Ansprüche, **dadurch gekennzeichnet, dass** die Waschwasserverteilereinheit (20a; 20b; 20b') eine, insbesondere schlauchfreie, Schnellkuppelvorrichtung (44a; 44b) zu einer fluiddichten Kupplung der Waschwasserverteilereinheit (20a; 20b; 20b') mit einer externen Waschwasserzuleitung (46a; 46b) aufweist.

12. Wischblattvorrichtung nach Anspruch 11, **dadurch gekennzeichnet, dass** die Schnellkuppelvorrichtung (44a; 44b) zumindest einen Aufnahmekanal (48a; 48b) zu einer Aufnahme einer externen Waschwasserzuleitung (46a; 46b) eines Wischarms (14a; 14b) eines Wischers (16a; 16b) aufweist.

13. Wischblattvorrichtung nach Anspruch 12, **dadurch gekennzeichnet, dass** der Aufnahmekanal (48a; 48b) zumindest eine Einführungsschräge (50a; 50b) aufweist.

14. Wischblattvorrichtung nach Anspruch 12 oder 13, **dadurch gekennzeichnet, dass** bei einer Kupplung mittels der Schnellkuppelvorrichtung (44a; 44b) der Aufnahmekanal (48a; 48b) durch ein Dichtelement (52a; 52b), insbesondere eine Dichtkante, der externen Waschwasserzuleitung (46a; 46b) wasserdicht mit der externen Waschwasserzuleitung (46a; 46b) verbindbar ist.

15. Wischblattvorrichtung nach einem der Ansprüche 12 bis 14, **dadurch gekennzeichnet, dass** die Adaptereinheit (12a; 12b) einen Wischarmadapter (38a; 38b) zu einer Kopplung mit einem Wischarm (14a; 14b) eines Wischers (16a; 16b) aufweist, welcher eine Clips-Verbindung zu einer Verbindung mit dem Wischarm (14a; 14b) umfasst, wobei die Clips-Verbindung dazu vorgesehen ist, eine Einführtiefe für eine externe Waschwasserzuleitung (46a; 46b) des Wischarms (14a; 14b) in den Aufnahmekanal (48a; 48b) vorzugeben.

16. Wischblattvorrichtung nach Anspruch 1,
**dadurch gekennzeichnet, dass** der gewinkelte Verlauf des Kanalkupplungselements (24b; 24b') und/oder des weiteren Kanalkupplungselements (40b; 40b') einen Knick und/oder eine Krümmung mit einem Winkel (100b; 100b') umfasst, welcher zumindest
im Wesentlichen einem rechten Winkel entspricht.

17. Wischblattvorrichtung nach einem der vorhergehenden Ansprüche, **dadurch gekennzeichnet, dass** der Waschwasserkanal (26b) ein Verbindungselement (92b) aufweist, welches zumindest zu einer Herstellung einer fluiddichten Verbindung zwischen dem Waschwasserkanal (26a; 26b; 26b') und der Waschwasserverteilereinheit (20b) mittels eines formschlüssigen Eingriffs in das Kanalkupplungselement (24b) und/oder in ein weiteres Kanalkupplungselement (40b) vorgesehen ist.

18. Wischer (16a; 16b), insbesondere Scheibenwischer, mit einer Wischblattvorrichtung nach einem der vorhergehenden Ansprüche.

## Claims

1. Wiper blade device, in particular wiper blade device for a windscreen wiper, having at least one wiper blade (10a; 10b), having at least one adapter unit (12; 12b) for coupling the wiper blade (10a; 10b) to a wiper arm (14a; 14b) of a wiper (16a; 16b), in particular windscreen wiper, having at least one spray unit (18a; 18b) which is integrated in the wiper blade (10a; 10b), and having at least one washing water distributor unit (20a; 20b; 20b') for supplying washing water to the spray unit (18a; 18b), in particular to nozzle elements (22a; 22b) of the spray unit (18a; 18b) which are arranged at least substantially parallel with a main extent direction (54a, 54b) of the wiper blade (10a; 10b) along the wiper blade (10a; 10b), wherein the washing water distributor unit (20a; 20b; 20b') has at least one channel coupling element (24a; 24b; 24b') for a preferably fluid-tight coupling of at least one component of the washing water distributor unit (20a; 20b; 20b') to a washing water channel (26a; 26b; 26b') of the spray unit (18a; 18b), which coupling is provided in particular for a passage of a fluid, and wherein the washing water distributor unit (20a; 20b; 20b') has at least one adapter coupling element (28a; 28b) for a preferably fluid-tight coupling of at least one additional component of the washing water distributor unit (20a; 20b; 20b') to an additional washing water channel (30a; 30b) of the adapter unit (12a; 12b), which coupling is provided in particular for a passage of a fluid, wherein the additional washing water channel (30a; 30b) is at least partially formed by the adapter unit (12a; 12b), wherein the washing water distributor unit (20a; 20b; 20b') has a washing water supply line channel (32a; 32b) which is formed integrally with a wiper arm adapter (38a; 38b) of the adapter unit (12a; 12b), and which is arranged in an angled manner with respect to the additional washing water channel (30a; 30b) of the adapter unit (12a; 12b), wherein the channel coupling element (24b; 24b') and/or an additional channel coupling element (40b, 40b') of the washing water distributor unit (20b; 20b') have an angled profile, **characterized in that** the adapter coupling element (28a; 28b) has a locking device (86a; 86b) for positioning the adapter coupling element (28a; 28b) relative to the adapter unit (12a; 12b).

2. Wiper blade device according to Claim 1, **characterized in that** the adapter unit (12a; 12b) in a mounted state is connected to the wiper blade (10a; 10b) at least substantially in a non-detachable manner, in particular at least substantially in a non-releasable manner.

3. Wiper blade device according to either of the preceding claims, **characterized in that** the channel coupling element (24a; 24b; 24b') and the adapter coupling element (28a; 28b) are connected by means of at least one at least partially flexible washing water line (34a; 34b).

4. Wiper blade device according to Claim 3, **characterized in that** the adapter coupling element (28a; 28b) is coupled to at least one additional flexible washing water line (36a; 36b).

5. Wiper blade device according to one of the preceding claims, **characterized in that** the adapter coupling element (28a; 28b) has a sealing element (88a; 88b), in particular a sealing edge, to form a water-tight coupling at least with the additional washing water channel (30a; 30b) of the adapter unit (12a; 12b).

6. Wiper blade device according to Claim 5, **characterized in that** the locking device (86a; 86b), in particular at least one locking element (74a; 74b) of the locking device (86a; 86b), is provided for fixing the adapter coupling element (28a; 28b) in the additional washing water channel (30a; 30b) of the adapter unit (12a; 12b).

7. Wiper blade device according to one of the preceding claims, **characterized in that** the adapter unit (12a; 12b) has a wiper arm adapter (38a; 38b) for coupling to a wiper arm (14a; 14b) of a wiper (16a; 16b) which is connected to the adapter coupling element (28a; 28b) in a rotationally secure manner.

8. Wiper blade device according to one of the preceding claims, **characterized in that** the adapter unit (12a; 12b) has a wiper arm adapter (38a; 38b) for coupling to a wiper arm (14a; 14b) of a wiper (16a; 16b), wherein the at least one channel coupling element (24a; 24b; 24b') can be moved relative to the wiper arm adapter (38a; 38b) .

9. Wiper blade device according to one of the preceding claims, **characterized in that** the channel coupling element (24a; 24b; 24b'), the adapter coupling element (28a; 28b), the flexible washing water line (34a; 34b), the additional flexible washing water line (36a; 36b) and/or an additional channel coupling element (40a; 40b; 40b') of the washing water distributor unit (20a; 20b; 20b') are constructed as an integral washing water distributor element (42a; 42b) of the washing water distributor unit (20a; 20b; 20b').

10. Wiper blade device according to Claim 9, **characterized in that** the washing water distributor element (42a; 42b) is constructed as a multi-coloured injection-moulded component.

11. Wiper blade device according to one of the preceding claims, **characterized in that** the washing water distributor unit (20a; 20b; 20b') has an, in particular hose-free, rapid coupling device (44a; 44b) for a fluid-tight coupling of the washing water distributor unit (20a; 20b; 20b') to an external washing water supply line (46a; 46b).

12. Wiper blade device according to Claim 11, **characterized in that** the rapid coupling device (44a; 44b) has at least one receiving channel (48a; 48b) for receiving an external washing water supply line (46a; 46b) of a wiper arm (14a; 14b) of a wiper (16a; 16b).

13. Wiper blade device according to Claim 12, **characterized in that** the receiving channel (48a; 48b) has at least one inclined introduction member (50a; 50b).

14. Wiper blade device according to Claim 12 or 13, **characterized in that,** with a coupling by means of the rapid coupling device (44a; 44b), the receiving channel (48a; 48b) can be connected to the external washing water supply line (46a; 46b) in a water-tight manner by means of a sealing element (52a; 52b), in particular a sealing edge, of the external washing water supply line (46a; 46b) .

15. Wiper blade device according to one of Claims 12 to 14, **characterized in that** the adapter unit (12a; 12b) has a wiper arm adapter (38a; 38b) for coupling to a wiper arm (14a; 14b) of a wiper (16a; 16b), which wiper arm adapter comprises a clip-fit connection for connection to the wiper arm (14a; 14b), wherein the clip-fit connection is provided to predetermine an introduction depth for an external washing water supply line (46a; 46b) of the wiper arm (14a; 14b) in the receiving channel (48a; 48b).

16. Wiper blade device according to Claim 1, **characterized in that** the angled profile of the channel coupling element (24b; 24b') and/or of the additional channel coupling element (40b; 40b') comprises a bend and/or a curvature having an angle (100b; 100b') which at least substantially corresponds to a right angle.

17. Wiper blade device according to one of the preceding claims, **characterized in that** the washing water channel (26b) has a connecting element (92b) which is provided at least for producing a fluid-tight connection between the washing water channel (26a; 26b; 26b') and the washing water distributor unit (20b) by means of form-fitting engagement in the channel coupling element (24b) and/or in an additional channel coupling element (40b).

18. Wiper (16a; 16b), in particular windscreen wiper, having a wiper blade device according to one of the preceding claims.

## Revendications

1. Dispositif formant balai d'essuie-glace, en particulier dispositif formant balai d'essuie-glace pour un essuie-glace, comportant au moins un balai d'essuie-glace (10a ; 10b), comportant au moins une unité adaptateur (12a ; 12b) servant à un raccordement du balai d'essuie-glace (10a ; 10b) à un bras d'essuyage (14a ; 14b) d'un dispositif d'essuyage (16a ; 16b), en particulier d'un essuie-glace, comportant au moins une unité de pulvérisation (18a ; 18b) intégrée dans le balai d'essuie-glace (10a ; 10b) et au moins une unité de distribution d'eau de lavage (20a ; 20b ; 20b') servant à une alimentation en eau de lavage de l'unité de pulvérisation (18a ; 18b), en particulier d'éléments de buse (22a ; 22b) de l'unité de pulvérisation (18a ; 18b) disposés au moins sensiblement parallèlement à une direction d'étendue principale (54a ; 54b) du balai d'essuie-glace (10a ; 10b) le long du balai d'essuie-glace (10a ; 10b), l'unité de distribution d'eau de lavage (20a ; 20b ; 20b') comportant au moins un élément de raccordement de canal (24a ; 24b ; 24b') servant à un raccordement d'au moins une partie de l'unité de distribution d'eau de lavage (20a ; 20b ; 20b') à un canal d'eau de lavage (26a ; 26b ; 26b') de l'unité de pulvérisation (18a ; 18b), lequel raccordement est de préférence étanche aux fluides et prévu en particulier pour un passage d'un fluide, et l'unité de distribution d'eau de lavage (20a ; 20b ; 20b') présentant au moins un élément de raccordement d'adaptateur (28a ; 28b) servant à un raccordement d'au moins une autre partie de l'unité de distribution d'eau de lavage (20a ; 20b ; 20b') à un autre canal d'eau de lavage (30a ; 30b) de l'unité adaptateur (12a ; 12b), lequel raccordement est de préférence étanche aux fluides et prévu en particulier pour un passage d'un fluide, l'autre canal d'eau de lavage (30a ; 30b) étant au moins partiellement formé par l'unité adaptateur (12a ; 12b), l'unité de distribution d'eau de lavage (20a ; 20b ; 20b') présentant un canal d'amenée d'eau de lavage (32a ; 32b) formé d'une seule pièce avec un adaptateur de bras d'essuyage (38a ; 38b) de l'unité adaptateur (12a ; 12b), lequel canal d'amenée d'eau de lavage est disposé de manière inclinée par rapport à l'autre canal d'eau de lavage (30a ; 30b) de l'unité adaptateur (12a ; 12b),
l'élément de raccordement de canal (24b ; 24b') et/ou un autre élément de raccordement de canal (40b, 40b') de l'unité de distribution d'eau de lavage (20b ; 20b') présentant une allure inclinée, **caractérisé en ce que** l'élément de raccordement d'adaptateur (28a ; 28b) présente un dispositif d'encliquetage (86a ; 86b) servant à un positionnement de l'élément de raccordement d'adaptateur (28a ; 28b) par rapport à l'unité adaptateur (12a ; 12b).

2. Dispositif formant balai d'essuie-glace selon la revendication 1, **caractérisé en ce que** l'unité adaptateur (12a ; 12b), dans un état monté, est reliée au balai d'essuie-glace (10a ; 10b) de manière au moins sensiblement imperdable, en particulier de manière au moins sensiblement non détachable.

3. Dispositif formant balai d'essuie-glace selon l'une des revendications précédentes, **caractérisé en ce que** l'élément de raccordement de canal (24a ; 24b ; 24b') et l'élément de raccordement d'adaptateur (28a ; 28b) sont reliés au moyen d'au moins une conduite d'eau de lavage (34a ; 34b) au moins partiellement souple.

4. Dispositif formant balai d'essuie-glace selon la revendication 3, **caractérisé en ce que** l'élément de raccordement d'adaptateur (28a ; 28b) est raccordé à au moins une autre conduite d'eau de lavage souple (36a ; 36b) .

5. Dispositif formant balai d'essuie-glace selon l'une des revendications précédentes, **caractérisé en ce que** l'élément de raccordement d'adaptateur (28a ; 28b) présente un élément d'étanchéité (88a ; 88b), en particulier une arête d'étanchéité, pour un raccordement étanche à l'eau au moins à l'autre canal d'eau de lavage (30a ; 30b) de l'unité adaptateur (12a ; 12b).

6. Dispositif formant balai d'essuie-glace selon la revendication 5, **caractérisé en ce que** le dispositif d'encliquetage (86a ; 86b), en particulier au moins un élément d'encliquetage (74a ; 74b) du dispositif d'encliquetage (86a ; 86b), est prévu pour une fixation de l'élément de raccordement d'adaptateur (28a ; 28b) dans l'autre canal d'eau de lavage (30a ; 30b) de l'unité adaptateur (12a ; 12b).

7. Dispositif formant balai d'essuie-glace selon l'une des revendications précédentes, **caractérisé en ce que** l'unité adaptateur (12a ; 12b) présente un adaptateur de bras d'essuyage (38a ; 38b) servant à un raccordement à un bras d'essuyage (14a ; 14b) d'un dispositif d'essuyage (16a ; 16b), lequel est relié de manière solidaire en rotation à l'élément de raccordement d'adaptateur (28a ; 28b) .

8. Dispositif formant balai d'essuie-glace selon l'une des revendications précédentes, **caractérisé en ce que** l'unité adaptateur (12a ; 12b) présente un adaptateur de bras d'essuyage (38a ; 38b) servant à un raccordement à un bras d'essuyage (14a ; 14b) d'un dispositif d'essuyage (16a ; 16b), l'au moins un élément de raccordement de canal (24a ; 24b ; 24b') étant mobile par rapport à l'adaptateur de bras d'essuyage (38a ; 38b).

9. Dispositif formant balai d'essuie-glace selon l'une des revendications précédentes, **caractérisé en ce que** l'élément de raccordement de canal (24a ; 24b ; 24b'), l'élément de raccordement d'adaptateur (28a ; 28b), la conduite d'eau de lavage souple (34a ; 34b), l'autre conduite d'eau de lavage souple (36a ; 36b) et/ou un autre élément de raccordement de canal (40a ; 40b ; 40b') de l'unité de distribution d'eau de lavage (20a ; 20b ; 20b') sont réalisés sous la forme d'un élément de distribution d'eau de lavage (42a ; 42b) d'une seule pièce de l'unité de distribution d'eau de lavage (20a ; 20b ; 20b').

10. Dispositif formant balai d'essuie-glace selon la revendication 9, **caractérisé en ce que** l'élément de distribution d'eau de lavage (42a ; 42b) est réalisé sous la forme d'une pièce moulée par injection multicolore.

11. Dispositif formant balai d'essuie-glace selon l'une des revendications précédentes, **caractérisé en ce que** l'unité de distribution d'eau de lavage (20a ; 20b ; 20b') présente un dispositif de raccordement rapide (44a ; 44b), en particulier sans tuyau, servant à un raccordement étanche aux fluides de l'unité de distribution d'eau de lavage (20a ; 20b ; 20b') à une conduite externe d'amenée d'eau de lavage (46a ; 46b).

12. Dispositif formant balai d'essuie-glace selon la revendication 11, **caractérisé en ce que** le dispositif de raccordement rapide (44a ; 44b) présente au moins un canal de réception (48a ; 48b) servant à une réception d'une conduite externe d'amenée d'eau de lavage (46a ; 46b) d'un bras d'essuyage (14a ; 14b) d'un dispositif d'essuyage (16a ; 16b).

13. Dispositif formant balai d'essuie-glace selon la revendication 12, **caractérisé en ce que** le canal de réception (48a ; 48b) présente au moins un biseau d'introduction (50a ; 50b).

14. Dispositif formant balai d'essuie-glace selon la revendication 12 ou 13, **caractérisé en ce que**, lors d'un raccordement au moyen du dispositif de raccordement rapide (44a ; 44b), le canal de réception (48a ; 48b) peut être relié de manière étanche à l'eau à la conduite externe d'amenée d'eau de lavage (46a ; 46b) par le biais d'un élément d'étanchéité (52a ; 52b), en particulier d'une arête d'étanchéité, de la conduite externe d'amenée d'eau de lavage (46a ; 46b).

15. Dispositif formant balai d'essuie-glace selon l'une des revendications 12 à 14, **caractérisé en ce que** l'unité adaptateur (12a ; 12b) présente un adaptateur de bras d'essuyage (38a ; 38b) servant à un raccordement à un bras d'essuyage (14a ; 14b) d'un dispositif d'essuyage (16a ; 16b), lequel comprend une liaison par enclipsage pour former une liaison avec le bras d'essuyage (14a ; 14b), la liaison par enclipsage étant prévue pour définir une profondeur d'insertion pour une conduite externe d'eau de lavage (46a ; 46b) du bras d'essuyage (14a ; 14b) dans le canal de réception (48a ; 48b).

16. Dispositif formant balai d'essuie-glace selon la revendication 1, **caractérisé en ce que** l'allure inclinée de l'élément de raccordement de canal (24b ; 24b') et/ou de l'autre élément de raccordement de canal (40b ; 40b') comprend un coude et/ou une courbure présentant un angle (100b ; 100b'), lequel correspond au moins sensiblement à un angle droit.

17. Dispositif formant balai d'essuie-glace selon l'une des revendications précédentes, **caractérisé en ce que** le canal d'eau de lavage (26b) présente un élément de liaison (92b), lequel est prévu au moins pour la réalisation d'une liaison fluidique entre le canal d'eau de lavage (26a ; 26b ; 26b') et l'unité de distribution d'eau de lavage (20b) au moyen d'une entrée en prise par complémentarité de formes dans l'élément de raccordement de canal (24b) et/ou dans un autre élément de raccordement de canal (40b).

18. Dispositif d'essuyage (16a ; 16b), en particulier essuie-glace, comportant un dispositif formant balai d'essuie-glace selon l'une des revendications précédentes.
